# EUROPEAN PATENT APPLICATION

(11) **EP 0 830 971 A2**
(43) Date of publication of application: **25.03.1998**
(21) Application number: 97306898.4
(22) Date of filing: 05.09.1997
(51) Int. Cl.: B60N 2/14

(54) **Car seat reversing system**

(30) Priority: 06.09.1996 JP 236497/96; 11.04.1997 JP 93392/97
(71) Applicant: NABCO LIMITED, Kobe (JP); Ikeda Bussan Co., Ltd., Ayase-shi Kanagawa-ken (JP)
(72) Inventor: Macuda, Takashi, c/o Nabco Limited,, Kobe (JP); Asada, Kenji, c/o Ikeda Bussan Co.Ltd,, Kanagawa-ken (JP)
(74) Representative: Lerwill, John

(57) **Abstract**

A seat carriage is mounted on a fixed support in such a manner as to be rotatable clockwise and counterclockwise about a first rotation center. An engagement member is mounted on the fixed support to restrict the rotation of the seat carriage within a range of about 180 degrees. A transmission member can rotate clockwise and counterclockwise about the first rotation center. A pushing member is mounted for rotation about the first rotation center. The location of the pushing member is on a circle along which the transmission member moves and outside a range in which the transmission member moves for rotating the seat carriage over the 180 degree range. A motor causes the pushing member to rotate about the first rotation center and also bring the pushing member into contact with the transmission member for rotation therewith. The transmission member is also rotatable about a second rotation center so that the contact between the pushing member and the transmission member can be removed. The contact between the pushing member and the transmission member is maintained by a spring until the further rotation of the seat carriage is prevented by the engagement member.

## Description

This invention relates to a system for reversing car seats of a train to turn round seats.

### BACKGROUND OF THE INVENTION

The head of an up train becomes the tail when the train returns as a down train. Whether the train is an up train or a down train, it is desirable that car seats face forward, i.e. in the direction in which the train is moving. Then, the direction of the car seats must be reversed at the starting or terminal station. A seat reversing system is used for this purpose.

Japanese Unexamined Patent Publication (KOKAI) No. HEI 7-329619 published on December 19, 1995 discloses an example of seat reversing system of this type. The system disclosed in this publication includes seats each of which is mounted on a support in such a manner that it can be rotated in a horizontal plane. The seat is locked by a locking device which prevents the seat from rotating while the train is moving. When it is desired to reverse the seat, i.e. to change the direction in which the seat is oriented, the seat is unlocked by means of an electrically operated actuator, and a geared motor is actuated to drive a transmission arm on the support over an angle of about 90 degrees in the direction in which the seat is to be rotated, which causes the transmission arm to engage with a rotating member mounted on the seat. The transmission arm, which is in engagement with the rotating member on the seat, is rotated further 180 degrees in the same direction so that the seat is rotated further by 180 degrees. Thus, the seat is reversed to be oriented in the opposite direction.

The seat reversing system of this Japanese publication rotates car seats about 180 degrees by rotating the transmission arm 270 degrees in total. Then, the transmission arm is rotated in the opposite direction by 270 degrees back to the initial position after the seat rotating operation is completed and the seats are locked again by the locking device.

As is understood, the transmission arm of the described system must be moved over 540 degrees in total for reversing the direction of the seat. In addition, the transmission arm must be kept unmoved after it is rotated about 270 degrees in the direction of rotation of the seats until the locking of the seat is completed. Thus, this system requires a relatively long time for reversing the seats.

In addition, if the seats are long ones, such as triple seats for three people, seats adjacent to each other in the length direction of a car may interfere with each other when all of them are rotated simultaneously. In such a case, it is necessary to rotate odd-numbered seats first and even-numbered ones second, or vice versa. It, therefore, takes a longer time to reverse all the seats.

Another drawback of this system is that if the geared motor fails and stops in the middle of the rotating operation of the seat, it is very hard to manually rotate the seat in the required direction because the resistance against rotation of the geared motor is large.

Furthermore, this system requires, in addition to the geared motor, an electrically operated actuator for use in unlocking the seat. Thus, the number of components is undesirably large.

An object of the present invention is to provide a seat reversing system which can automatically reverse car seats in a short time. Another object of the present invention is to provide a seat reversing system which can easily reverse a number of car seats simultaneously.

### SUMMARY OF THE INVENTION

A car seat reversing system according to a first aspect of the present invention includes a seat carriage mounted on a support in such a manner as to be capable of rotating about a rotation center. A stop is disposed on the support to permit the seat carriage to rotate only over an angular range of about 180 degrees. A transmission member is mounted on the seat carriage in such a manner as to be capable of rotating about the rotation center of the seat carriage. A pushing member having a rotation center at the same location as the seat carriage is disposed on the circle along which the transmission member rotates, at a location outside the range of the rotation of the transmission member with the rotation of the seat carriage over the range of about 180 degrees. The pushing member is rotated to come into contact with the transmission member, and the transmission member together with the pushing member is rotated by a motor.

One of the pusher member and the transmission member is freely movable about its own axis so that they can be separated from each other. Once the pushing member comes into contact with the transmission member, the contact between them is maintained by urging means until further rotation of the seat carriage is prevented by the stop member.

According to a second aspect of the present invention, a seat carriage is mounted on a support. The seat carriage has a rotation center and is rotatable between two seat positions angularly spaced by about 180 degrees from each other. A locking member locks the seat carriage at the respective positions.

A transmission member is mounted on the seat carriage in such a manner as to be capable of rotating about the rotation center of the seat carriage.

A pushing member is mounted on the seat carriage. The pushing member has a rotation center at the rotation center of the seat carriage. The pushing member is mounted in such a manner that it can rotate clockwise and counterclockwise about the rotation center from a position between the two seat positions on a circle along which the transmission member rotates. The pushing member rotates to be brought into contact with the transmission member.

One of the transmission member and pushing member is movable from an advanced position to a retracted position spaced from the advanced position along the line passing through the rotation center, while being kept in contact with the other on the circle, and, then further to a turnout position where it is disengaged from the other. First urging means urges the one of the transmission member and pushing member toward the advanced position. Engaging means is formed on the one of the transmission member and pushing member and inhibits the one member from rotating at the advanced position, while permitting its moving at the retracted position. Second urging means urges the one member toward the retracted position.

A seat reversing system according to a third aspect of the invention includes a seat carriage, a locking member, a pushing member, and a transmission member which are similar to those of the seat reversing system according to the second aspect stated above.

One of the transmission member and pushing member is movable from an advanced position to a retracted position spaced from the advanced position along the line passing through the rotation center, while being kept in contact with the other on the circle. Urging means urges the one of the transmission member and pushing member so that the contact between the transmission member and the pushing member can be maintained.

According to a fourth aspect of the invention, a plurality of seats are arranged in a row. Each seat includes a seat carriage mounted on a support in such a manner as to be rotatable about a rotation center between two seat positions angularly spaced from each other by about 180 degrees, a locking member for locking the seat carriage at the respective ones of the two seat positions, a manipulating member for releasing the locking member and restoring the seat from the reclined position, and a drive unit receptive of a reversing command to actuate the manipulating member and cause the seat carriage to be rotated. A manipulation detecting member is disposed on the seat carriage of odd-numbered or even-numbered seats of a car to detect the actuation of the manipulating member. The manipulation detecting member develops a detection signal when it detects the actuation of the manipulating member. A control unit provides the reversing command to the drive unit.

The control unit includes reversing command output means for simultaneously providing the reversing command to the respective drive units of the seats, and halting means receptive of the detection signal from the manipulation detecting member for temporarily halting the supply of the reversing command to the ones of the odd-numbered and even-numbered seats. The system further includes reversing command re-transmitting means for transmitting again the reversing command to the ones of the odd-numbered and even-numbered seats upon the completion of the rotation of the seat carriages of the other ones of the odd-numbered and even-numbered seats.

According to a fifth aspect of the invention, a seat reversing system includes a plurality of seats each including a seat carriage, a locking member, a manipulating member, and a drive unit which are similar to those of the seat reversing system according the the fourth aspect described above. A control unit provides a reversing command to the drive unit.

The control unit includes reversing command output means for simultaneously providing the reversing command to the respective drive units of the seats, first timer means for counting a time corresponding to the time from the starting of the operation of the system to the completion of the operation of the manipulating member, halting means receptive of a signal from the first timer means for halting the supply of the reversing command to the seat carriages of ones of the odd-numbered and even-numbered seats, and reversing command re-transmitting means for transmitting again the reversing command to the seat carriages of the ones of the odd-numbered and even-numbered seats upon the completion of the rotation of the seat carriages of the other ones of the odd-numbered and even-numbered seats.

### BRIEF DESCRIPTION OF THE DRAWINGS

FIGURE 1 is a front view of a seat provided with a seat reversing system according a first embodiment of the present invention.

FIGURE 2 is a front, cross-sectional view of the seat reversing system of FIGURE 1, with a cover of the system removed.

FIGURE 3 is a plan view of the seat reversing system of FIGURE 1, with the cover removed.

FIGURES 4A through 4H are partially cut-away views of part of the seat reversing system of FIGURE 1, illustrating the process of the rotation of the seat.

FIGURE 5 is a circuit diagram of a control switch panel for controlling the seat reversing system of FIGURE 1.

FIGURE 6 is a circuit diagram of a control panel for the odd-numbered seats for use in controlling the seat reversing system of FIGURE 1.

FIGURE 7 is a circuit diagram of a control panel for the even-numbered seats for use in controlling the seat reversing system of FIGURE 1.

FIGURE 8 is a plan view of a car of a train on which seats with a seat reversing system according to a second embodiment of the invention are installed.

FIGURE 9 is a front view of one of the seats of FIGURE 8.

FIGURE 10 is a plan view of the seat reversing system of FIGURE 9, with a cover of the system removed.

FIGURE 11 is a front, cross-sectional view of the seat reversing system of FIGURE 10, with the cover removed.

FIGURE 12 is a plan view of a transmission member used in the seat reversing system of FIGURE 9.

FIGURE 13 is a side view of the transmission member of FIGURE 12.

FIGURE 14 is a cross-sectional view along a line XIV-XIV in FIGURE 13, showing the transmission member engaging with a shaft about which it can rotate.

FIGURE 15 is a cross-sectional view along a line XIV-XIV in FIGURE 13, showing the transmission member disengaged from the shaft.

FIGURES 16A through 16H are partially cutaway views of part of the seat reversing system of FIGURE 9, illustrating the process of the rotation of the seat.

FIGURES 17(a), 17(b) and 17(c) illustrate a process how a transmission member of the second embodiment is disengaged from a pushing roller.

FIGURE 18 is circuit diagram of a central control panel for the seat reversing system of FIGURE 9.

FIGURE 19 is a circuit diagram of a relay box disposed on an odd-numbered seat of the second embodiment.

FIGURE 20 is a circuit diagram of a relay box disposed on an even-numbered seat of the second embodiment.

FIGURE 21 is a flow chart of the operation of a programmable controller in the central control panel for rotating the seat clockwise by means of the seat reversing system of FIGURE 9.

FIGURE 22 is a flow chart of the operation of the programmable controller for rotating the seat counterclockwise by means of the seat reversing system of FIGURE 9.

FIGURE 23 is a plan view of a seat reversing system according to a third embodiment of the present invention, with a cover of the system removed.

FIGURE 24 is a front, cross-sectional view of the seat reversing system of FIGURE 23, with the cover removed.

FIGURE 25 is a plan view of a transmission member used in the seat reversing system of FIGURE 23.

FIGURE 26 is a side view of the transmission member of FIGURE 25.

FIGURES 27A through 27H are partially cutaway views of part of the seat reversing system of FIGURE 23, illustrating the process of the rotation of the seat.

### DETAILED DESCRIPTION OF EMBODIMENTS

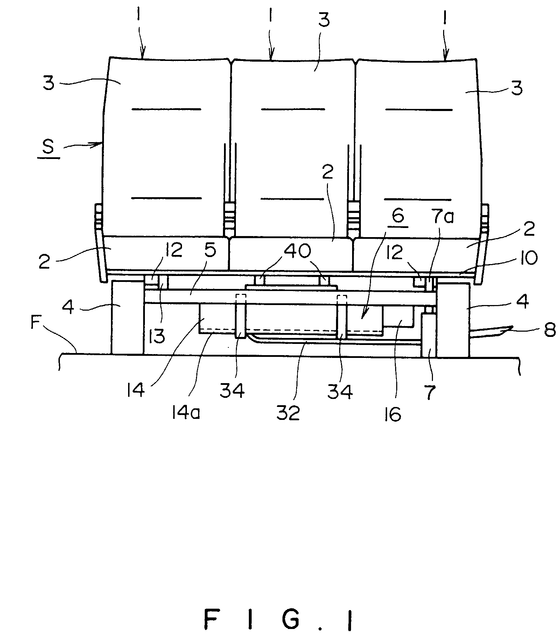

A seat reversing system according to a first embodiment of the present invention is described with reference to FIGURES 1-7. A seat unit S of a train may include, for example, three seats 1 as shown in FIGURE 1. Each seat 1 includes a seat bottom 2 and a backrest 3 which can be reclined with respect to the seat bottom 2. From laterally opposed sides of the bottom surface of the seat bottom 2, two legs 4 extend downward and secured to a floor F. A lateral member 5 extends between the legs 4, which supports a seat reversing system 6.

A locking member 7 is associated with the seat reversing system 6. The locking member 7 is located on the aisle side (i.e. the right-hand side in FIGURE 1) of the seat unit S. Normally, the seat unit S is locked by a locking pin 7a of the locking member 7 so that the seat unit S cannot rotate in a horizontal plane. The locking of the seat unit S by the locking pin 7a is released by pushing down a pedal 8 on the aisle side of the seat unit S, by, for example, a foot. The seat unit S in this unlocked state can be manually rotated in a horizontal plane by 180 degrees so that the direction in which the seat unit S faces can be reversed. Also, all of the seat units S of a car may be automatically rotated through the seat reversing systems of the respective seat units. In such a case, the locking of the seat units S is automatically released.

The backrests 3 in the inclined position are automatically restored to the upright position before the seat unit S is rotated. When the pedal 8 is pushed down to unlock the seat unit S in the manual rotating operation mode, or when the locking pins 7a are automatically released in the automatic rotating operation mode, the backrests 3 return to the upright position from the reclined position. However, because the arrangement for this backrest position restoration does not directly pertain to the subject of the present invention, no more description about it is made.

A bottom plate 10 is attached to the bottom surface of the seat bottom 2 of the seat unit S. In laterally opposite end portions of the bottom plate 10, two engagement holes (not shown) are formed at locations which are point-symmetrical with each other with the point of symmetry located at the center of the plate 10. When the seat unit S is rotated 180 degrees, the locking pin 7a of the locking member 7 engages with either one of the engagement holes by virtue of a spring in the locking member 7 to thereby prevent the seat unit S from rotating. At locations near the engagement holes in the bottom plate 10, two stops 12 extend downward. When the seat unit S is rotated by 180 degrees, one of the stops 12 engages with a contact member 13 secured to the lateral member 5 at a location near the window side (i.e. the left-hand side in FIGURE 1) end of the seat unit S.

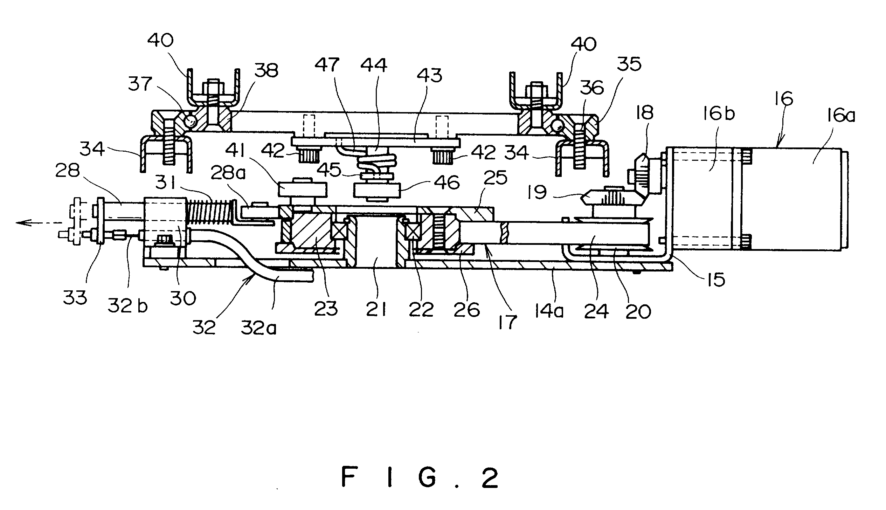

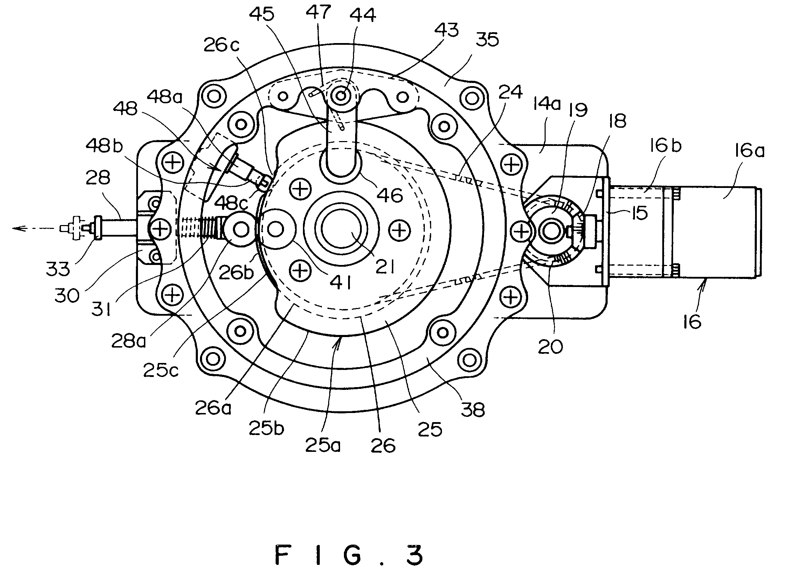

As shown in FIGURE 1, the seat reversing system 6 includes a housing 14 and a base, e.g. a bottom plate 14a. FIGURES 2 and 3 are a partially cutaway front view and a plan view of the system 6 with the housing 14 removed.

A driving power source 16 is secured to one end (i.e. the aisle side end) of the bottom plate 14a via an L-shaped bracket 15. The driving power source 16 includes a motor 16a and a speed reducer or reduction gear 16b. The driving force provided by the driving power source 16 is transmitted through a transmission system 17 to first and second rotary members 25 and 26 described later.

Specifically, the output shaft of the driving power source 16 is coupled to a driving pulley 20 via straight bevel gears 18 and 19. The pulley 20 is mounted on the bottom plate 14a in such a manner as to be rotatable about an axis perpendicular to the bottom plate 14a.

At substantially the center of the bottom plate 14a corresponding to the center of the seat unit S, a vertically extending support shaft 21 is secured to the bottom plate 14a. On the shaft 21, a follower pulley 23 is rotatably mounted with a bearing 22 interposed between them. A belt 24 is looped around the driving pulley 20 and the follower pulley 23. The first rotary member 25 is disposed on the upper surface of the follower pulley 23, and the second rotary member 26 is disposed on the lower surface of the follower pulley 23. The rotary members 25 and 26 are concentric with the shaft 21 and are secured to the follower pulley 23 by means of, for example, rivets so that they can rotate with the follower pulley 23.

In the outer periphery of the first rotary member 25, a main cam 25a is formed, which includes a larger diameter section 25b and a smaller diameter section 25c formed in a part of the larger diameter section 25b. A roller 28a engages with the main cam 25a. The roller 28a is mounted on the tip end of a manipulating member or rod 28. A manipulator supporting member 30 is secured to the bottom plate 14a at its window side. The manipulating member 28 is supported by the manipulator supporting member 30 in such a manner as to be movable toward and away from the aisle side. The manipulating member 28 is urged in such a direction as to urge the roller 28a against the main cam 25a, i.e. in the direction toward the aisle side, by a spring 31 disposed on an intermediate portion of the manipulating member 28. The roller 28a is in contact with substantially the center of the smaller diameter section 25c when the seat unit S is in its initial position in which it faces a predetermined first direction. The smaller diameter section 25c of the cam 25a is so shaped that the roller 28a comes into contact with the larger diameter section 25b when the first rotary member 25 rotates in the clockwise or counterclockwise direction in FIGURE 3 by about 50 degrees.

As shown in FIGURE 2, an outer tube 32a of a pull cable 32 has its one end secured to the manipulator supporting member 30. The pull cable 32 also includes an inner wire 32b disposed in the outer tube 32a which has its one end connected via a connector 33 to the manipulating member 28 at the end remote from the roller 28a, as shown in FIGURE 2. The other end of the pull cable 32 is connected to the pedal 8, so that, when the inner wire 32b moves together with the manipulating member 28 toward the window side of the seat unit S, the locking pin 7a is disengaged from the engagement hole, as it is disengaged in the case that the pedal 8 is pushed down.

The housing 14 and the bottom plate 14a of the seat reversing system 6 are held in place by two holders 34 laterally spaced from each other as shown in FIGURE 1. An outer ring 35 is secured by bolts 36 to the holders 34 which, in turn, is secured to the lateral member 5. An inner ring 38 is disposed inside and flush with the outer ring 35 with balls 37 interposed between them so that the inner and outer rings 35 and 38 can rotate relative to each other. The inner and outer rings 35 and 38 are concentric with the shaft 21. Two seat carriages 40 are secured to the top surface of the inner ring 38 by which the inner ring 38 is connected to the bottom surface of the bottom plate 10 of the seat unit S. Accordingly, the seat unit S rotates with the inner ring 38 when it rotates inside the outer ring 35.

A pushing member, e.g. pushing roller 41 is secured to the top surface of the first rotary member 25 in the vicinity of the smaller diameter section 25c. The pushing roller 41 is rotatable about a shaft extending perpendicular to the top surface of the first rotary member 25.

As shown in FIGURE 2, a support plate 43 is secured to the bottom surface of the inner ring 38 by means of bolts 42, and a shaft 44 extends downward from the support plate 43. An arm 45 is supported at its proximal end by the shaft 44 in such a manner that it can rotate in a horizontal plane about the shaft 44. The distal end of the arm 45 extends toward the shaft 21, and a transmission member, e.g. transmission roller 46, is mounted on the distal end of the arm 45. The transmission roller 46 is rotatable about an axis extending perpendicular to the top and bottom surfaces of the inner ring 38.

The pushing roller 41 and the transmission roller 46 are disposed on the same circle concentric with the shaft 21 and are flush with each other. The axes of the rollers 41 and 46 are angularly spaced by about 90 degrees when the seat unit S is in the initial position. The diameters of the rollers 41 and 46 are so selected that the pushing roller 41 contacts with the transmission roller 46 when the pushing roller 41 rotates about 54 degrees in the clockwise direction.

Between the arm 45 and the support plate 43, biasing means, e.g. spring 47, is disposed to so bias the arm 45 as to maintain it in the position shown in FIGURE 3, i.e. a neutral position. Thus, although the arm 45 may rotate clockwise or counterclockwise with its proximal end serving as the center of rotation when external force is applied to it, the arm 45 can restore the neutral position shown in FIGURE 3 due to the force provided by the spring 47 as the external force applied to it is removed. The spring force provided by the spring 47 is larger than the rotation resistance of the seat unit S, but it is smaller than the driving force of the motor 16a.

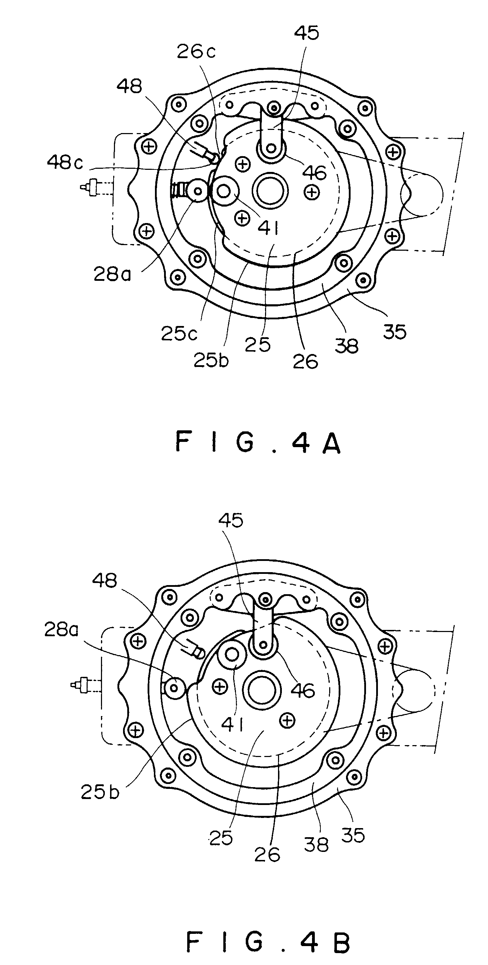

As will be described later, the transmission roller 46 moves from the initial position, which it assumed when the seat unit S is in the above-described initial position, over an angular range of about 180 degrees (i.e. the angular range as illustrated in FIGURES 4A through 4H described later), and the pushing roller 41 is located outside the moving range of the transmission roller 46 when in the initial position.

A detecting cam 26a is formed on the outer periphery of the second rotary member 26. The detecting cam 26a includes a larger diameter section 26b and a smaller diameter section 26c formed in a part of the larger diameter section 26b. A member, e.g. a limit switch 48, for detecting when the pushing roller 41 is in the initial position is mounted on the outer ring 35. The limit switch 48 detects the presence of the roller 41 in the initial position when it contacts with the detecting cam 26a.

The limit switch 48 includes a sleeve 48a in which an inner sleeve 48b is telescopically fitted. The inner sleeve 48b is urged against the detecting cam 26a on the second rotary member 26 by urging means, e.g. a spring (not shown). A roller 48c is rotatably mounted on the tip end of the inner sleeve 48b. The roller 48c is in contact with the smaller diameter section 26c of the cam 26a when the seat unit S is in the initial position. The smaller diameter section 26c is so determined that the portion with which the roller 48c contacts may change from the smaller diameter section 26c to the larger diameter section 26b as the second rotary member 26 rotates slightly. In the initial position where the pushing roller 41 is angularly spaced from the transmission roller 46 by about 90 degrees, the limit switch 48 has its contact opened. The contact of the limit switch 48 is closed when the roller 48c is brought into contact with the larger diameter section 26b.

Next, the automatic operation of the seat reversing system 6 for rotating the seat unit S at the starting station or the terminal station for the train is described. Let it be assumed that the seat unit S is rotated in the clockwise direction from its predetermined first direction when viewed from the above.

As shown in FIGURE 4A, before the seat unit S is rotated, the seat unit S is in the initial position where the roller 28a of the manipulating member 28 is in contact with the midpoint of the smaller diameter section 25c of the main cam 25a, and the roller 48c of the limit switch 48 is in contact with the smaller diameter section 26c of the detecting cam 26a.

For rotating the seat unit S in the clockwise direction, the motor 16a is energized to rotate the driving pulley 20 in the clockwise direction indicated by an arrow in FIGURE 4A. The rotation of the driving pulley 20 in the clockwise direction is transmitted via the belt 24 to the follower pulley 23 so that it rotates in the clockwise direction. This causes the first and second rotary members 25 and 26 to rotate in the clockwise direction, too. When the first and second rotary members 25 and 26 rotates about fifty (50) degrees as shown in FIGURE 4B, the roller 28a of the manipulating member 28 is disengaged from the smaller diameter section 25c of the main cam 25a and comes into contact with the larger diameter section 25b, which causes the manipulating member 28 to be pushed toward the window side of the train, i.e. leftward in FIGURE 2.

Then, the inner wire 32b of the pull cable 32 is pulled toward the window side. As a result, the locking pin 7a of the locking member 7 is disengaged from the engagement hole in the plate 10 against the force given by the spring of the locking member and the seat unit S is unlocked, as in the case where the pedal 8 is pushed down by foot. If one or more of the backrests are in the reclined position, they return to the upright position.

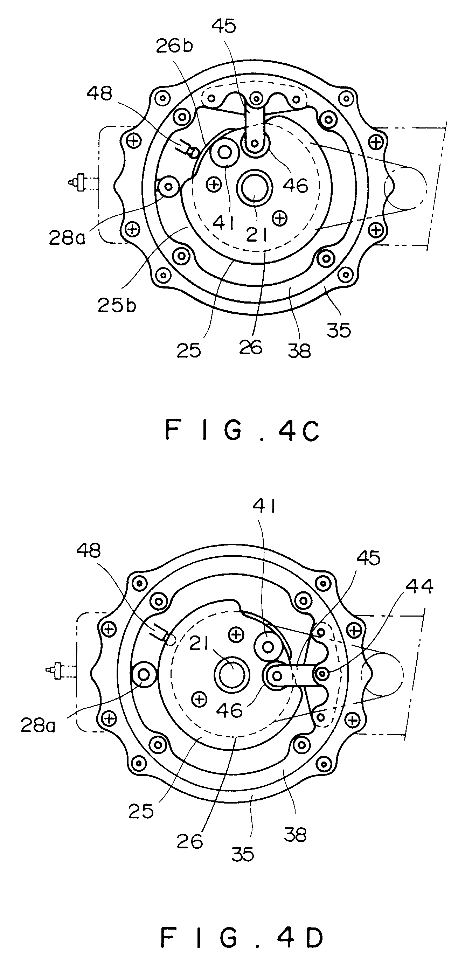

As the motor 16a rotates further, the first and second rotary members 25 and 26 rotate further in the clockwise direction. When they rotate about fifty-three (53) degrees from the initial position, the pushing roller 41 comes into contact with the transmission roller 46 as shown in FIGURE 4C. As described above, the spring force of the spring 47 is larger than the rotation resistance of the seat unit S, and, therefore, even when the first rotary member 25 rotates further in the clockwise direction, the arm 45 does not rotate about the shaft 44. Therefore, the pushing roller 41 which moves with the rotation of the first rotary member 25 pushes the transmission roller 46 to rotate in the clockwise direction about the shaft 21, which causes the inner ring 38 and the seat unit S to start rotating in the clockwise direction.

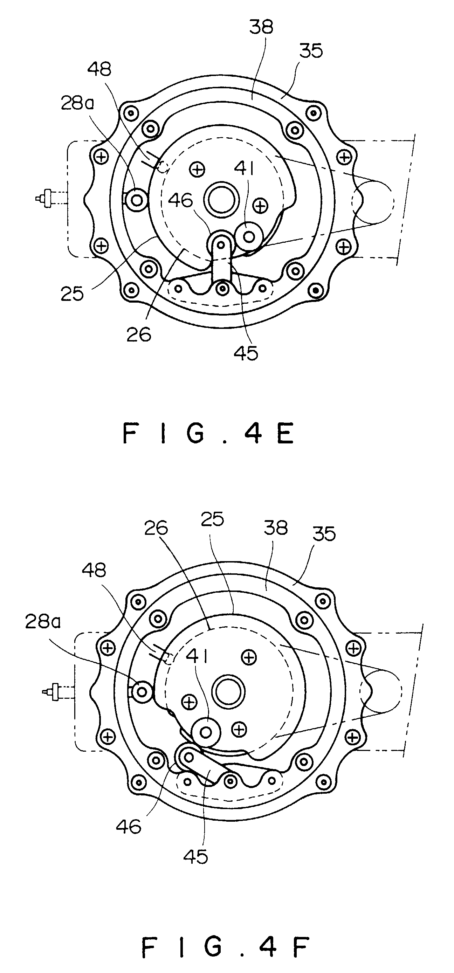

As shown in FIGURE 4D, when the first rotary member 25 and the pushing roller 41 rotate from the initial position by about one hundred and fourty-three (143) degrees, the transmission roller 46 and the seat unit S are in the positions about ninety (90) degrees away from their initial positions in the clockwise direction. When the first rotary member 25 and the pushing roller 41 come to the positions spaced by about two hundred and thirty-three (233) degrees from their initial positions, the transmission roller 46 and the seat unit S are in the positions spaced by about one hundred and eighty (180) degrees from their initial positions in the clockwise direction, as shown in FIGURE 4E. In the position of the seat unit S shown in FIGURE 4E, the stop member 12 on the bottom plate 10 of the seat unit S engages with the contact member 13 secured to the lateral member 5 which, in turn, is secured to the floor F of the car, whereby the seat unit S is prevented from rotating further in the clockwise direction.

On the other hand, the first and second rotary members 25 and 26 are driven further clockwise by the motor 16a. Since the driving force of the motor 16a is larger than the force provided by the spring 47, the pushing roller 41 on the first rotary member 25, while rotating further in the clockwise direction, pushes the arm 45 to rotate in the counterclockwise direction about the shaft 44 as shown in FIGURE 4F.

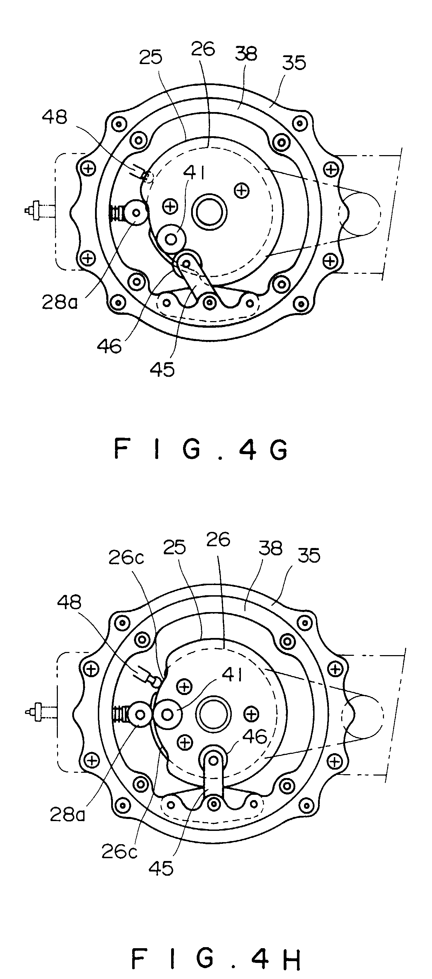

As the first rotary member 25 rotates further clockwise, the roller 28a of the manipulating member 28 comes into contact with the smaller diameter section 25c of the main cam 25a, as shown in FIGURE 4G, which causes the inner wire 32b of the pull cable 32 to move toward the aisle side. This, in turn, causes the locking pin 7a of the locking member 7 to be moved into the engagement hole in the seat unit S by virtue of the force provided by the spring in the locking member 7, so that the seat unit S is locked. Also, the the pushing roller 41 is disengaged from the transmission roller 46, so that the arm 45 returns to its neutral position by virtue of the spring 47.

As the first rotary member 25 further rotates in the clockwise direction by three hundred and sixty (360) degrees from its initial position, that is, when the first rotary member 25 rotates one rotation, the roller 48c of the limit switch 48 comes into contact with the smaller diameter section 26c of the detecting cam 26a, which causes the limit switch 48 to be opened. This causes the motor 16a to stop rotating, and, as a result, the first and second rotary members 25 and 26 stop rotating. Thus, the rotating operation of the seat unit S is completed.

As described above, the seat unit S is rotated one hundred and eighty (180) degrees by rotating the pushing roller 41 in the same directions by three hundred and sixty (360) degrees in contrast to about five hundred and fouty (540) degrees in total in the above-discussed prior art system. Accordingly, the present system requires a less time than the prior art system for reversing the seat unit. This is particularly true when the seat unit S is long, consisting of, for example, three seats. When a seat unit S is long, it is difficult to rotate all of the seat units S of one car at one time. In such a case, odd-numbered seat units and even-numbered seat units may have to be separately rotated, which requires a longer time. According to the first embodiment of the present invention, the total time required for rotating all of such long seat units S can be further reduced relative to the prior art system.

In addition, it is not necessary to change the direction of rotation of the motor 16a in a particular single seat rotating operation, which enables the use of a simpler control circuit for the motor 16a.

If the motor 16a becomes inoperable when the seat unit S is in an intermediate position, e.g. in the position shown in FIGURE 4D, during the rotation, the seat unit S can be rotated manually clockwise to the final position. For returning the seat unit S to the initial position from the position shown in FIGURE 4D where the motor 16a has failed, the seat unit S is manually rotated counterclockwise, which causes the arm 45 to rotate counterclockwise about the shaft 44. The counterclockwise rotation of the arm 45 causes the transmission roller 46 to be disengaged from the pushing roller 41.

Accordingly, even though the motor 16a fails to rotate, the seat unit S can be rotated counterclockwise to the initial position with ease.

The seat unit S is unlocked by the rotation of the first and second rotary members 25 and 26, no dedicated actuator for unlocking the seat unit S is required.

One complete rotation of the first and second rotary members 25 and 26 is detected by means of the limit switch 48 in association with the second rotary member 26. Thus, the reliable detection can be performed with a minimum number of components.

Because the motor 16a is disposed at a location beside the first and second rotary members 25 and 26 with the transmission system 17 interposed therebetween, the seat reversing system 6 has a small thickness and occupies only a small space beneath the seat unit S.

If the seat unit S is in the position rotated 180 degrees from the initial position when the seat reversing system 6 is enabled, the inner ring 38 is in the position shown in FIGURE 4H before the motor 16a starts rotating. The motor 16a makes the first and second rotary members 25 and 26 rotate 360 degrees in the clockwise direction, but the seat unit S is not rotated. If the backrests 3 are in the inclined position, they are returned to the upright position because the manipulating member 28 is moved to the window side by the main cam 25a.

For returning the seat unit S which is in the position spaced 180 degrees from the initial position, back to the initial position, the motor 16a is rotated in the reverse direction to thereby rotate the first and second rotary members 25 and 26 three hundred and sixty (360) degrees in the counterclockwise direction from the position shown in FIGURE 4H, whereby the seat unit S is rotated 180 degrees in the counterclockwise direction.

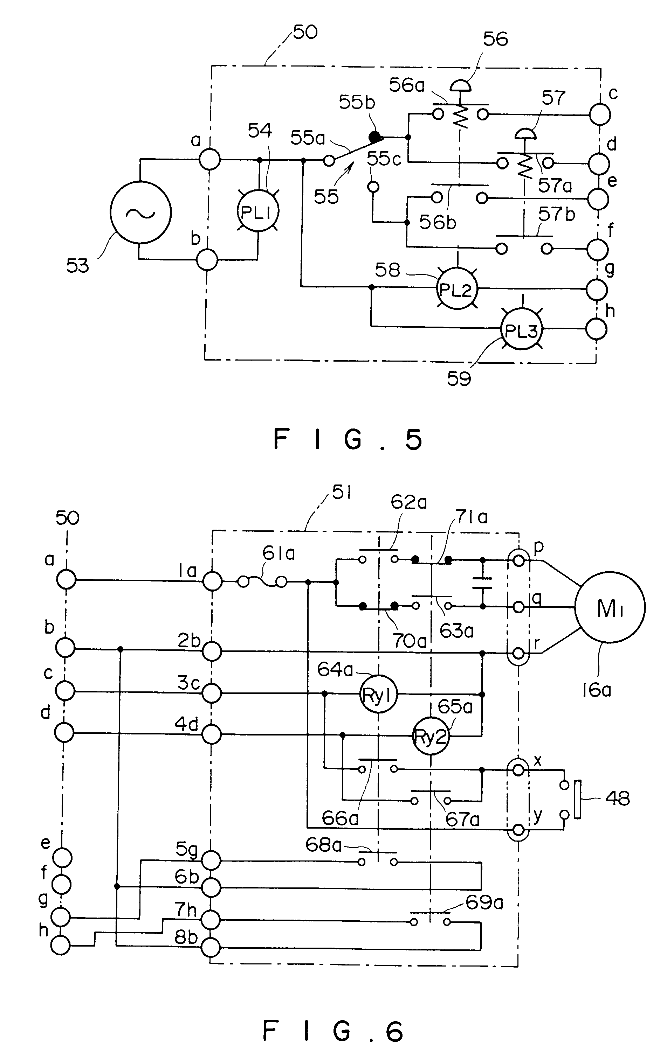

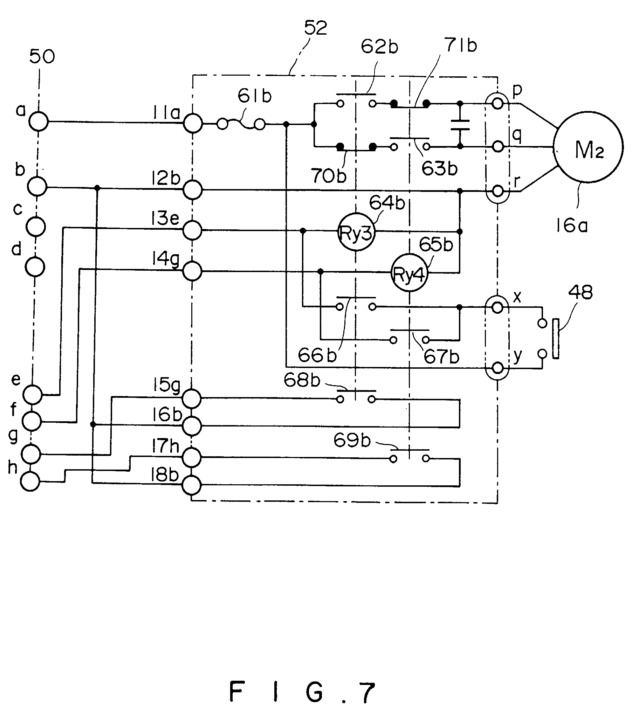

Next, an electrical circuit for use in changing the direction of the seat units S in one car is described. As shown in FIGURE 5, each car of a train has a control switch panel 50 for use in rotating the seat units S. In addition, a control panel 51 like the one shown in FIGURE 6 is provided for each of the odd-numbered seat units S, while a control panel 52 like the one shown in FIGURE 7 is provided for each of the even-numbered seat units S.

An AC power supply 53 is connected between terminals A and B of the control switch panel 50, between which a lamp 54 is also connected. The lamp 54 emits light when the AC power supply is coupled to the panel 50. A contact arm 55a of a selector switch 55 for determining which seat units S are to be rotated, the odd-numbered ones or the even-numbered ones, is connected to the terminal a. Between a contact 55b of the selector switch 55 for selecting the odd-numbered seat units S and a terminal c, a switch 56a associated with a push button 56 is connected. The button 56 is used for rotating the seat units S to face to the forward direction of the train running as an up train. A switch 57a associated with a button 57 is connected between the contact 55b and another terminal d. The button 57 is used for rotating the seat units S to face the forward direction of the train running as a down train.

Between a contact 55c of the selector switch 55 for selecting the even-numbered seat units S and a terminal e, a switch 56b associated with the push button 56 is connected. A switch 57b associated with the button 57 is connected between the contact 55b and a terminal f.

A lamp 58 is connected between the terminal a and a terminal g. This lamp is energized to emit light while the seat units S are being rotated to face the up-train's forward direction. Another lamp 59 is connected between the terminal a and a terminal h, and is energized to emit light while the seat units S are being rotated to face the down-train's forward direction. Both the switches 56a and 56b are closed when the button 56 has been pushed, and are opened when the button 56 is released. Similarly, both the switches 57a and 57b are closed when the button 57 has been pressed down, and are opened when the button 57 is released.

As shown in FIGURE 6, a series combination of a fuse 61a, a normally opened switch 62a and a normally closed switch 71a is connected between a terminal la of the control panel 51 of the seat reversing system 6 associated with each of the odd-numbered seat units S and a terminal p of the motor 16a. A series combination of a normally opened switch 63a and a normally closed switch 70a is connected between the node to which the fuse 61a and the normally opened switch 62a are connected and a terminal q of the motor 16a. A terminal 2b of the control panel 51 is connected to a terminal r of the motor 16a.

A relay 64a is connected between the terminal 2b and a terminal 3c, and a relay 65a is connected between the terminal 2b and a terminal 4d. The terminal 3c is connected through a normally opened switch 66a to one terminal x of the limit switch 48, and the terminal 4d is connected to the terminal x through a normally opened switch 67a. The terminal la is connected to the other terminal y of the limit switch 48 through the fuse 61a. A normally opened switch 68a is connected between terminals 5g and 6b, and a normally opened switch 69a is connected between terminals 7h and 8b. When current flows through the relay 64a, the normally opened switches 62a, 66a and 68a are closed, while the normally closed switch 70a is opened. When current flows through the relay 65a, the normally opened switches 63a, 67a and 69a are closed, while the normally closed switch 71a is opened. The connections between the terminals a through h of the control switch panel 50 and the terminals la through 8b of the control panel 51 are as follows. The terminal la of the control panel 51 is connected to the terminal a of the control switch panel 50; the terminal 2b to the terminal b; the terminal 3c to the terminal c; the terminal 4d to the terminal d; the terminal 5g to the terminal g, the terminal 6b to the terminal b, the terminal 7h to the terminal h; and the terminal 8b to the terminal b.

The control panel 52 associated with the seat reversing system 6 of each of the even-numbered seat units S is constructed similar to the control panel 51 as shown in FIGURE 7. Accordingly, a fuse, switches and relays of the control panel 52 are represented by the same reference numerals as used for the corresponding components of the control panel 51 with the letter "a" at the end of each reference numeral changed to "b", and the respective terminals of the control panel 52 are represented by the same reference numerals with a numeral "1" attached to the head of each reference numeral. Accordingly, detailed description of the control panel 52 is not made. The connections between the terminals a through h of the control switch panel 50 and the respective terminals 11a through 18b are as follows. The terminal 11a of the control panel 52 is connected to the terminal a of the control switch panel 50; the terminal 12b to the terminal b; the terminal 13c to the terminal c; the terminal 14d to the terminal d; the terminal 15g to the terminal g, the terminal 16b to the terminal b, the terminal 17h to the terminal h; and the terminal 18b to the terminal b.

Now, let it be assumed that the seat units S of a car are to be rotated to face the up-train's forward direction, and that the odd-numbered seat units S are first rotated and, then, the even-numbered seat units S are rotated. First, whether the lamp 54 is lit and the system is operable is seen. Then, the contact arm 55a of the selector switch 55 is thrown to the contact 55b for the odd-numbered seat units S. Then, the push button 56 is pressed to close the switches 56a and 56b.

This causes current to flow from the terminal a through the selector switch 55, the switch 56a, the terminal c, the terminal 3c of the control panel 51, the relay 64a and the terminal 2b to the terminal b. Thus, the relay 64a is energized, so that the normally open switches 62a, 66a and 68a are closed, and the normally closed switch 70a is opened. As a result, current flows from the terminal a, the terminal 1a, the switch 62a, the terminal p, the motor 16a, the terminal r and the terminal 2b to the terminal b. Thus, the motors 16a of the odd-numbered seat units S start rotating to rotate the odd-numbered seat units S in such a manner as to make them to face the up-train's forward direction.

Current also flows from the terminal a through the lamp 58, the terminal g, the terminal 5g, the switch 68a and the terminal 6b to the terminal b. The lamp 58 is energized to emit light, indicating that the odd-numbered seat units S are being rotated to face the up-train's forward direction.

As the motor 16a rotates, the limit switch 48 is closed, and, then, current flows from the terminal a through the terminal la, the limit switch 48, the switch 66a, the relay 64a and the terminal 2b to the terminal b. Accordingly, even after the button 58 is released, the energization of the relay 64 is maintained, so that the motor 16a continues to rotate.

The first and second rotary members 25 and 26 are rotated 360 degrees and the operation of reversing the seat units S to face in the up-train's forward direction is completed. Then, the limit switch 48 is opened to de-energize the relay 64a and the switches 62a, 66a and 68a are opened. At the same time, the switch 70a is closed. This causes the motor 16a to stop rotating and the lamp 58 to be turned off. It should be noted that the switch 70a is opened when the relay 64a is enabled so that the motor 16a can rotate in a normal fashion even when the switches 62a and 63a are both closed due to failure of the relay 65a.

Then, the contact arm 55a of the selector switch 55 is thrown to the contact 55c for the even-numbered seat units S, and the button 56a for the up-train's forward direction is pressed. Then, current flows from the terminal a through the selector switch 55, the switch 56b, the terminal e, the terminal 13e of the control panel 52, the relay 64b and the terminal 12b to the terminal b, so that the relay 64b is enabled. In a manner similar to the above, the even-numbered seat units S are rotated to face the up-train's forward direction.

For changing the direction of the seat units S to the down-train forward direction, the contact arm 55a of the selector switch 55 is thrown to the contact 55b for the odd-numbered seat units S. When the button 57 for the odd-numbered seat units S is pressed, current flows from the terminal a through the selector switch 55, the switch 57a, the terminal d, the terminal 4d, the relay 65a and the terminal 2b to the terminal b, to thereby enable the relay 65a. This causes the switches 63a, 67a and 69a to be closed, and the switch 71a to be opened.

Then, current flows from the terminal a through the terminal la, the switch 63a, the terminal q, the motor 16a, the terminal r and the terminal 2b to the terminal b, which energizes the motors 16a associated with the odd-numbered seat units S. The motors 16a start rotating in the reverse direction. The lamp 59 emits light, indicating that the odd-numbered seat units S are rotating to face the down-train's forward direction, and the relay 65a self-sustains its conduction state by the action of the limit switch 48 until the first and second rotary members 25 and 26 rotate one complete rotation. In a manner similar to the above, the odd-numbered seat units S are rotated to face the down-train's forward direction.

Similarly, the even-numbered seat units S are rotated to face the down-train's forward direction when the contact arm 55a of the selector switch 55 is thrown to the contact 55c and the button 57 for the down-train's forward direction is pressed.

In the embodiment thus far described, the seat units of a car are divided into the odd-numbered and even-numbered ones for successively rotating them for reversing their direction. However, if the seat unit S includes, for example, two seats and, therefore, is relatively short laterally, all of the seat units S may be rotated simultaneously.

Instead of one control switch panel 50 for each car, a single control switch panel 50 may be used for the entire train so that all of the seat units S of the train can be rotated simultaneously.

Also, the pushing roller 41, instead of the transmission roller 46, may be arranged to rotate about its axis so that the contact between the rollers 41 and 46 on the same circle can be released.

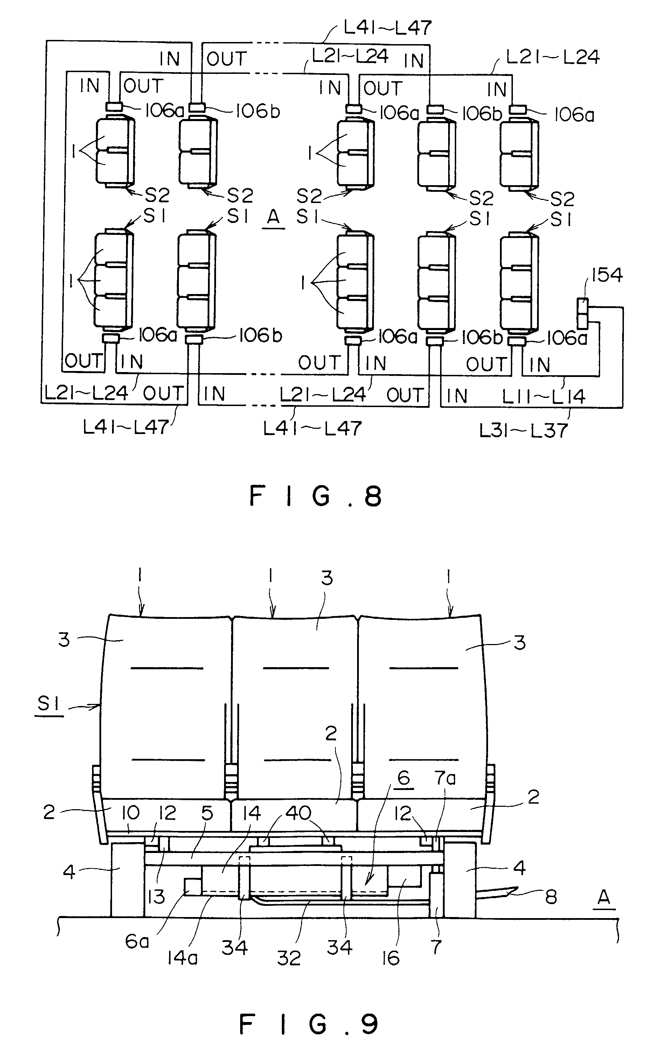

Next, a seat reversing system according to a second embodiment of the present invention is described with reference to FIGURES 8 through 22.

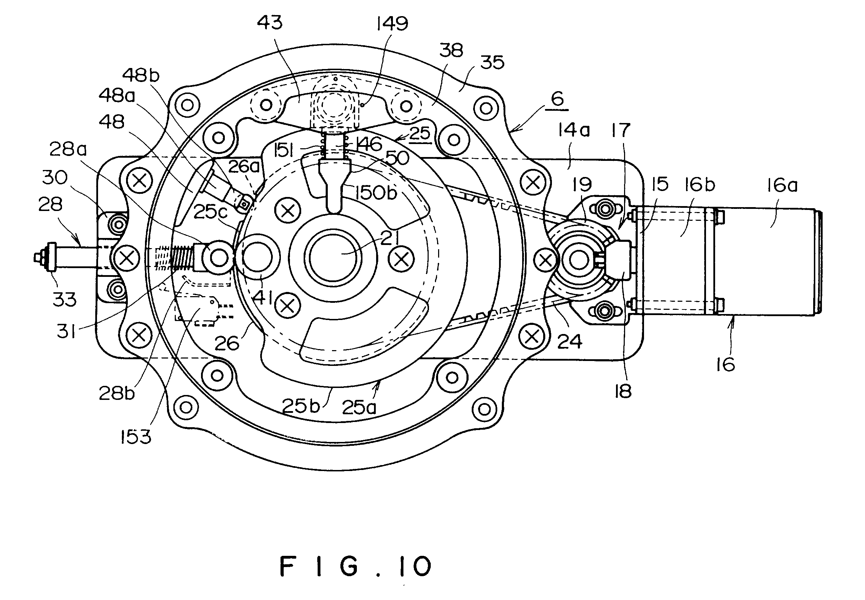

As shown in FIGURE 8, a plurality of seat units S1 and a plurality of seat units S2 are arranged across an aisle of each car of a train. The seat units S1 and the seat units S2 are similarly constructed, except that each seat unit S1 includes three seats, while each seat unit S2 includes two seats. Each of the seat units S1 and S2 is constructed similar to the seat units S of the first embodiment, as shown in FIGURE 9. Accordingly, parts similar to those of the first embodiment are represented by the same reference numerals as used for the first embodiment, and their detailed description is not made.

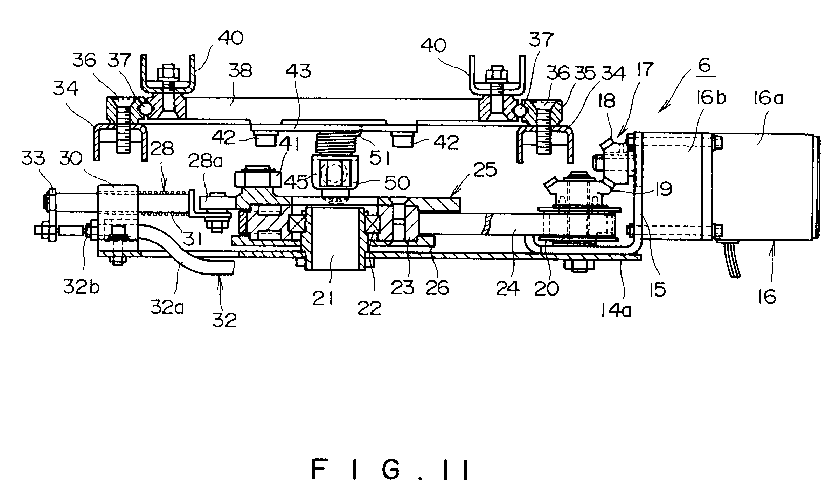

A seat reversing system 106 shown in FIGURES 10 and 11 is provided for each of the seat units S1 and S2. The seat reversing system 106 has the same structure as the seat reversing system 6 according to the first embodiment described above, except that a shaft 144 is used in place of the shaft 44 of the first embodiment and a transmission member 146 is used in place of the transmission roller 46 of the first embodiment. Accordingly, the same reference numerals as used for the seat reversing system 6 of the first embodiment are used for similar components and functions of the seat reversing system 106 of the second embodiment, and detailed description of such components and functions is not made.

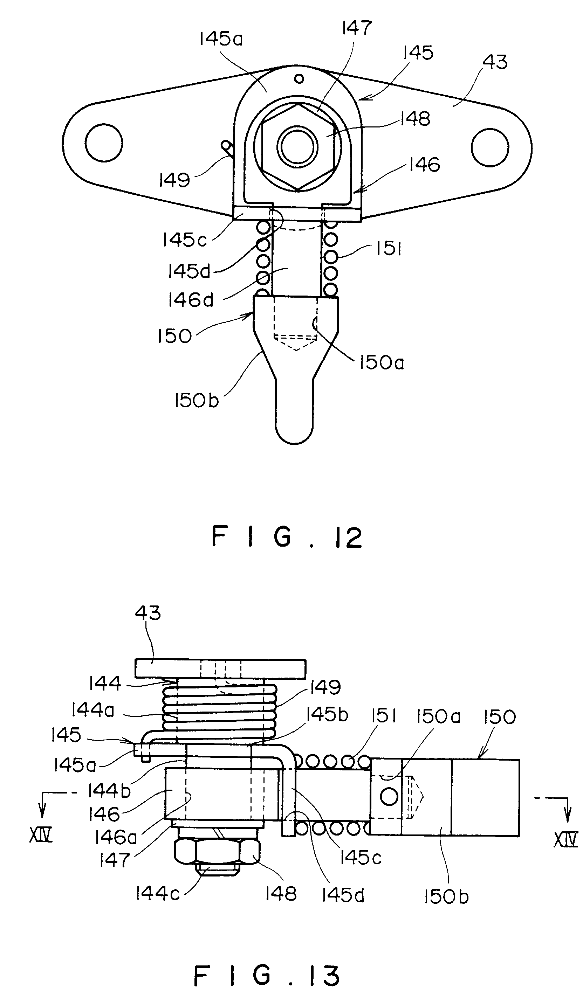

As shown in FIGURE 13, the shaft 144 includes a larger diameter section 144a, an intermediate, smaller diameter section 144b continuous to the section 144a, and a male screw section 144c continuous to the section 144b. A horizontally extending portion 145a of a bracket 145 having a generally L-shaped cross-section has a round hole 145b into which the shaft 144 is inserted in such a manner that the bracket 145 can freely move around the smaller diameter section 144b. The transmission member 146 is disposed in such a manner that the smaller diameter section 144b of the shaft 144 extends through a hole 146a in the transmission member 146, with the horizontally extending portion 145a of the bracket 145 located above the transmission member 146. A nut 148 is screwed onto the male screw section 144c with a washer 147 disposed between them, to thereby prevent the transmission member 146 from slipping off the shaft 144.

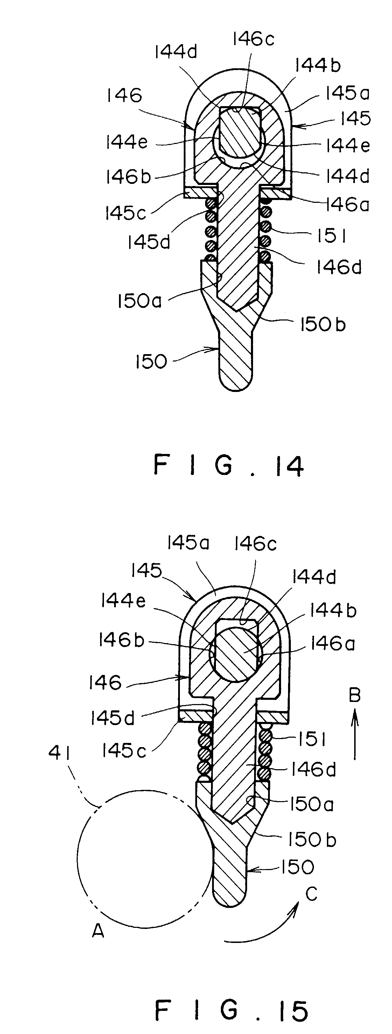

As shown in FIGURE 14, the outer periphery of the smaller diameter section 144b of the shaft 144 includes two opposed arcuate surface portions 144d and two opposed, parallel, vertical surface portions 144e extending between the two arcuate surface portions 144d. The hole 146a of the transmission member 146 has a rounded inner surface portion having a radius of curvature substantially the same as that of the arcuate surface portions 144d of the smaller diameter section 144b of the shaft 144, and also a generally rectangular portion 146c extending from the rounded portion 146b toward the proximal end of the transmission member 146.

Normally, the transmission member 146 is in an advanced position where the smaller diameter portion 144b fits into the substantially rectangular portion 146c, with the parallel, vertical surfaces 144e of the portion 144b facing the opposed side surfaces of the portion 146c. When in the advanced position, the transmission member 146 is prevented from rotating relative to the shaft 144.

As shown in FIGURE 13, second biasing means, for example, a torsion coil spring 149 is wound on the larger diameter section 144a of the shaft 144. The torsion coil spring 149 has its one end fixed to the support plate 43 and has the other end connected to the horizontal portion 145a of the bracket 145, so that the transmission member 146 is biased to be oriented toward the center of the shaft 21 as shown in FIGURE 10.

The transmission member 146 has a shaft 146d extending toward the support shaft 21 from the proximal end where the hole 146a is formed. The shaft portion 146d extends through a round aperture 145d in a vertically extending portion 145c of the bracket 145. The tip end of the shaft portion 146d is fitted into a hole 150a in a cylindrical member 150, and the cylindrical member 150 is fixed to the shaft portion 146d. The cylindrical member 150 is located at substantially the same radial distance from the support shaft 21 as the pushing roller 41.

First biasing means, e.g. a coil spring 151 is compressed between the vertical portion 145c of the bracket 145 and the cylindrical member 150. As shown in FIGURE 12, the cylindrical member 150 has a surface 150b tapered toward its tip end.

As will be described later, as the first rotary member 25 rotates, the pushing roller 41 comes into contact with one side of the tapered surface 150b, as shown in FIGURE 15. This causes the transmission member 146 to move to a retracted position B, which, in turn, causes the smaller diameter section 144b of the shaft 144 to move into the rounded portion 146b of the hole 146a of the transmission member 146. This makes the transmission member 146 ready to rotate about the smaller diameter section 144b in the direction indicated by an arrow C.

Now, the automatic seat rotating operation of the seat reversing system 106 of the second embodiment is described by explaining how to reverse the direction of the seat units S shown in FIGURE 9 by rotating them in the clockwise direction viewed from above the car. The rotation of the seat units S2 is carried out in the same manner.

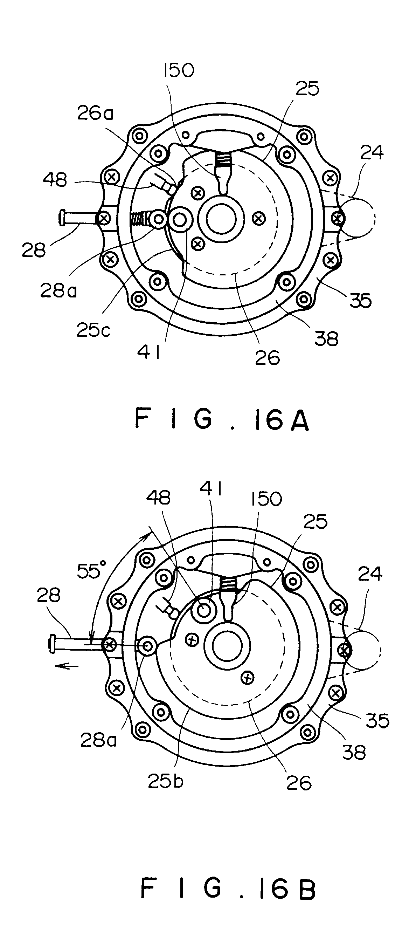

As shown in FIGURE 16A, when the seat units are in the initial position from which they are to be rotated, the roller 28a of the manipulating member 28 is in contact with substantially the midpoint of the smaller diameter section 25c of the cam 25a of the first rotary member 25, and the roller 48c of the limit switch 48 is in contact with the smaller diameter section 26a of the second rotary member 26. In this position of the seat unit, the pushing roller 41 is angularly spaced from the transmission member 146 by about 90 degrees.

The smaller diameter section 25c extends over such an angle that the roller 28a of the manipulating member 28 comes into contact with the larger diameter section 25b of the cam 25a when the first and second rotary members 25 and 26 rotate about 55 degrees from their initial positions.

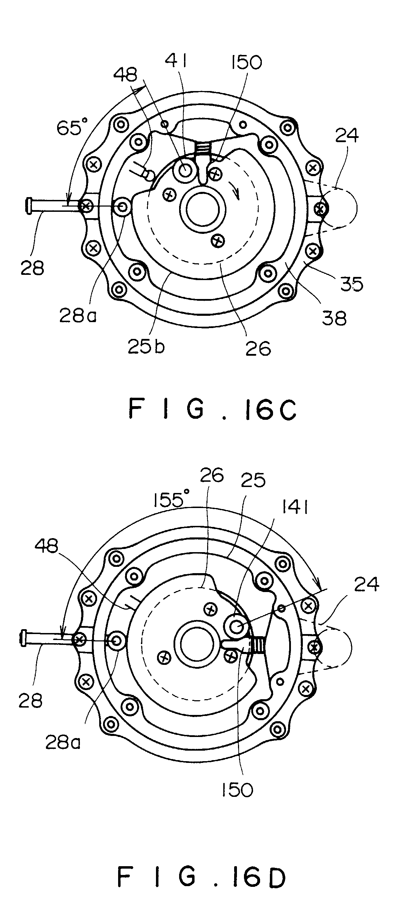

The pushing roller 41 and the transmission member 146 are so arranged that when the first and second rotary members 25 and 26 are rotated about 65 degrees from the initial positions, the pushing roller 41 comes into contact with the cylindrical member 150 of the transmission member 146 as shown in FIGURE 16C.

Thus, when the motor 16a makes the driving pulley 20 rotate in the clockwise direction, the first and second rotary members 25 and 26 rotate in the clockwise direction, too. When the first and second rotary members 25 and 26 rotates about 55 degrees from their initial positions, the roller 28a of the manipulating member 28 comes into contact with the larger diameter section 25b of the cam 25a, so that the manipulating member 28 is pushed toward the window side of the car. This causes the locking pin 7a of the locking member 7 to be disengaged from the hole in the seat unit S1, whereby the seat unit S1 is unlocked and, at the same time, the backrests 3, if reclined, are returned to their upright position.

When the first and second rotary members 25 and 26 are rotated about 65 degrees from the initial positions, the pushing roller 41 comes into contact with the transmission member 146, as shown in FIGURE 16C. The biasing force of the coil spring 151 is selected to be larger than the rotation resistance of the seat unit S1, and, therefore, even if the first rotary member 25 is rotated further in the clockwise direction, the transmission member 146 does not rotate about the shaft 144, but it is, instead, pushed by the pushing roller 41 as the first and second rotary members 25 and 26 rotate. Thus, the transmission member 146 rotates about the support shaft 21 in the clockwise direction. As a result, the inner ring 38 and the seat unit S1 also rotate in the clockwise direction.

When the first rotary member 25 and the pushing roller 41 rotate about 155 degrees from their initial positions as shown in FIGURE 16D, the transmission member 146 and the seat unit S1 are at 90 degrees clockwise from the initial positions.

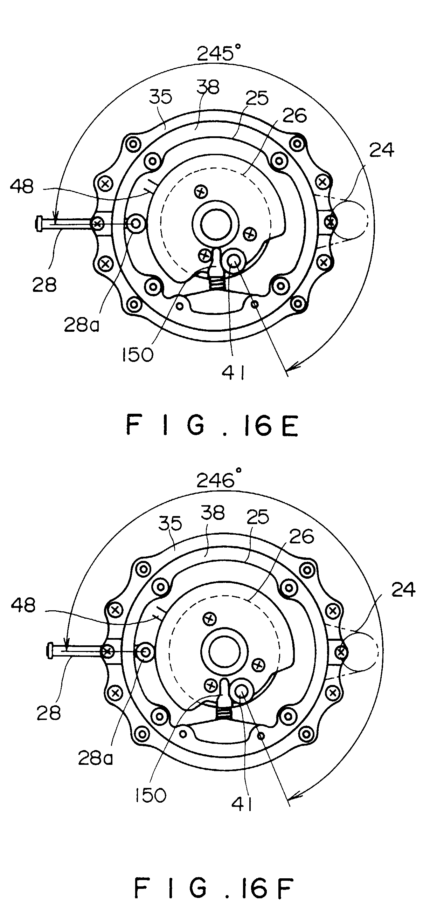

Further rotation of the first rotary member 25 and the pushing roller 41 to the positions angularly spaced by about 245 degrees from their respective initial positions, as shown in FIGURE 16E, causes the transmission member 146 and the seat unit S1 to rotate about 180 degrees clockwise, which causes the stop 12 on the bottom plate 10 of the seat unit S1 to contact with the contact member 13 to thereby prevent the seat unit S1 from further rotating clockwise.

The motor 16a rotates further the first and second rotary members 25 and 26 clockwise. The component of the driving force of the motor 16a in the direction along the center axis of the coil spring 151 is larger than the biasing force of the coil spring 151. Accordingly, as shown in FIGURE 16F, the pushing roller 41 pushes the cylindrical member 150 by the tapered surface 150b, so that the transmission member 146 is moved to the retracted position B away from the support shaft 21 shown in FIGURE 15.

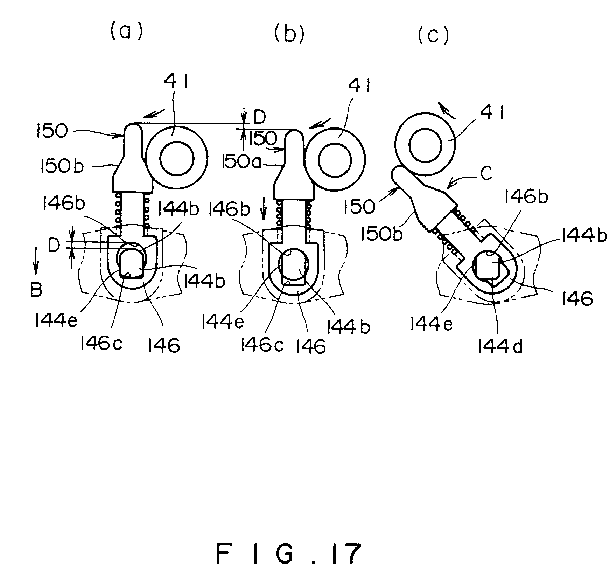

More specifically, as shown in FIGURE 17(a), as the pushing roller 41 rotates, the cylindrical member 150 and the seat carriages 40 start moving to the retracted position B. When they move by a predetermined distance D, the transmission member 146 reaches the retracted position B as shown in FIGURE 17(b), where the smaller diameter section 144b of the shaft 144 fits into the rounded portion 146b of the hole 146a of the transmission member 146. Then, the transmission member 146 rotates counterclockwise about the shaft 144 in the direction indicated by an arrow C. The biasing force of the torsion spring 149 is relatively small. Therefore, with the smaller diameter section 144b fitted into the rounded portion 146b of the hole 146a in the transmission member 146, the transmission member 146 can rotate about the section 144b as the cylindrical member 150 is pushed by the pushing roller 41.

At the same time, the roller 28a of the manipulating member 28 comes into contact with the smaller diameter section 25c of the cam 25a because of the rotation of the first rotary member 25, which causes the inner wire 32b of the pull cable 32 to move toward the aisle side A of the car and, therefore, the locking pin 7a is forced to move upward by, for example, a spring (not shown) into the engagement hole in the bottom plate 10 of the seat unit S1. Thus, the seat unit S1 is locked.

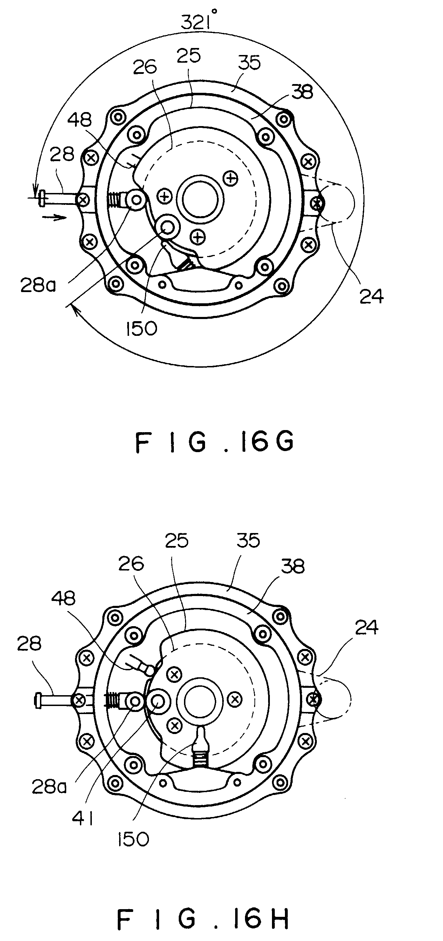

When the first rotary member 25 is further rotated to an angular position about three hundred thirty-one (321) degrees away from its initial position as shown in FIGURE 16G, the pushing roller 41 rotates to pass the cylindrical member 150. By this time point, the locking of the seat unit S1 which has already changed its facing direction has been finished. The disengagement of the pushing roller 41 from the cylindrical member 150 permits the transmission member 146 to be rotated clockwise about the shaft 144 by the biasing force provided by the torsion spring 149 and to return to the center position. Then, the coil spring 151 forces the transmission member 146 to return to the advanced position, so that the vertical parallel surfaces 144e of the smaller diameter section 144b of the shaft 144 engage with the corresponding vertical surfaces of the generally rectangular portion 146c of the hole 146a of the transmission member 146. This prevents the rotation of the transmission member 146 about the shaft 144, and, at the same time, permits the pushing roller 41 to come into contact with the transmission member 146.

The first rotary member 25 further rotates about the support shaft 21 to the 360 degree position away from the initial position. Then, as shown in FIGURE 16H, the roller 48c of the limit switch 48 is brought into contact with the smaller diameter section 26a of the second rotary member 26 to thereby turn off the limit switch 48. This disables the motor 16a, and, as a result, the first and second rotary members 25 and 26 stop rotating. Thus, the rotation of the seat unit S1 is completed.

For rotating counterclockwise the seat unit S1 which has been rotated 180 degrees, the motor 16a is rotated in the reverse direction to thereby rotate the first and second rotary members 25 and 26 from their respective positions shown in FIGURE 16H by 360 degrees in the counterclockwise direction.

Next, a control system and method for separately and successively rotating all the odd-numbered seat units and all the even-numbered seat units in one car, according to the second embodiment, are described.

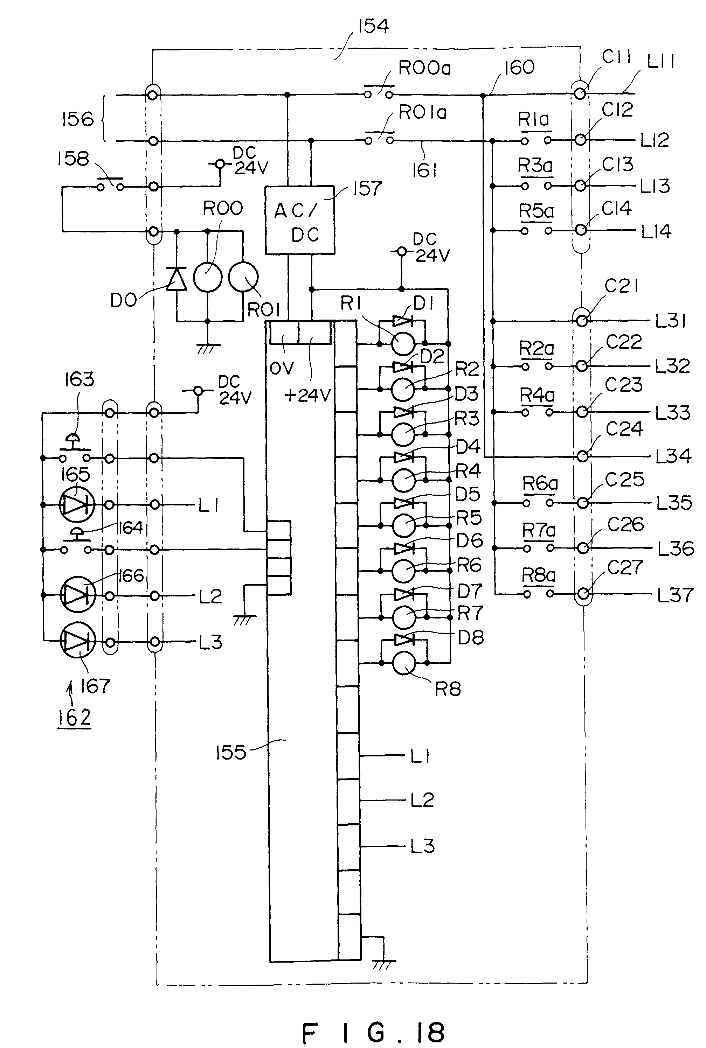

As shown in FIGURE 18, each car of a train is provided with a central control panel 154 for centrally controlling the seat reversing systems 106 of the respective seat units. The central control panel 154 includes a programmable controller (PC) 155 which functions as a control unit, a reverse command output means and re-transmitting means. The PC 155 is supplied with a DC voltage, e.g. a voltage of DC 24 V, which is obtained by converting an AC voltage from an AC supply 156 by an AC-to-DC (AC/DC) converter 157.

The car is provided with a speed detector 158 which is turned on when the train moves at a speed of 5 Km/h or less. The central control panel 154 is provided with a parallel combination of a diode D0 and two relays R00 and R01 which are energized when the output signal from the speed detector 158 is ON. In power supply lines 160 and 161 which couple the AC power supply 156 to the seat reversing systems 106 of the odd-numbered seat units S1 and S2 and the even-numbered seat units S1 and S2, switches R00a and R01a are connected. The switches R00a and R01a are closed when the relays R00 and R01 are energized.

The central control panel 154 includes a switch panel 162 for manual operation of the system 106. Manual operation control panel 162 includes a push-button switch 163 for activating the system 106 for rotating the seat units S1 and S2 in the clockwise direction, and a push-button switch 164 for activating the system 106 for rotating the seat units S1 and S2 in the counterclockwise direction. The switches 163 and 164 are connected to the PC 155 in the central control panel 154. The switch panel 162 is further provided with light-emitting diodes 165 and 166 which emit light when the push-button switches 163 and 164 are pressed, respectively. The switch panel 162 includes also a light-emitting diode 167 which emits light when the manual operation control switch panel 162 is in the operable state because of the power being supplied to it from the AC/DC converter 157.

Eight relays R1, R2, R3, R4, R5, R6, R7 and R8 are connected in parallel with eight diodes D1, D2, D3, D4, D5, D6, D7 and D8, respectively, and the parallel combinations are connected to the output of the PC 155.

The central control panel 154 includes four connectors C11, C12, C13 and C14 for odd-numbered seat units, and also seven connectors C21, C22, C23, C24, C25, C26 and C27 for even-numbered seat units. The power supply line 160 is connected to the connectors C11 and C24, and the power supply line 161 is connected to the connectors C12-C14, C21-C23 and C25-C27.

Contacts R1a, R3a and R5a of the relays R1, R3 and R5 are disposed in the stage preceding the connectors C12, C13 and C14, respectively. Contacts R2a, R4a, R6a, R7a and R8a of the respective relays R2, R4, R6, R7 and R8 are preceding the connectors C22, C23, C25, C26 and C27, respectively.

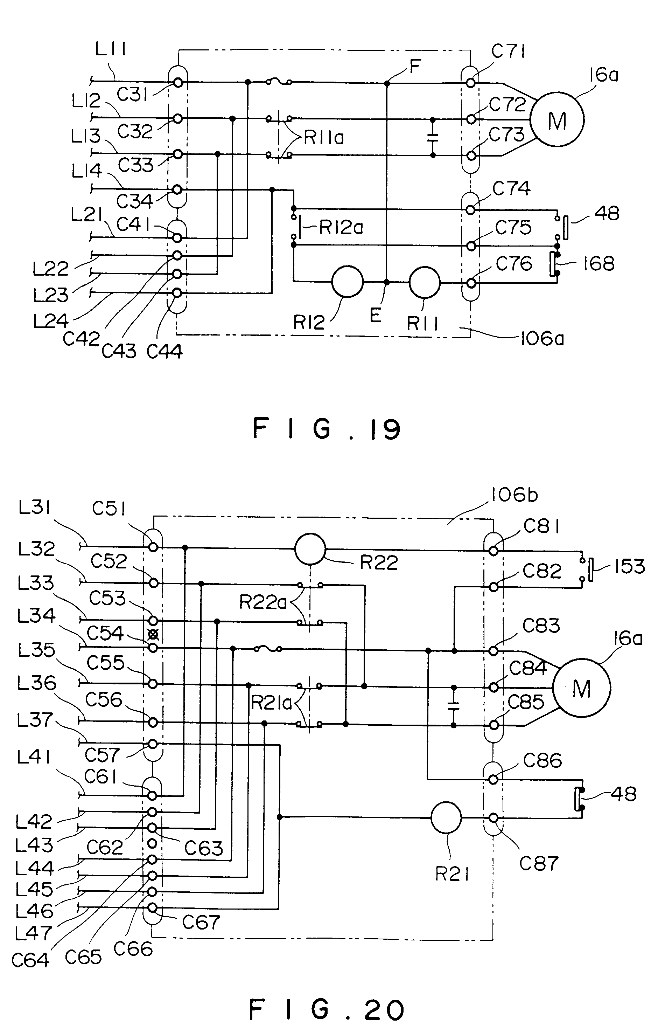

As shown in FIGURE 8, each of the seat rotating systems 106 of the odd-numbered seat units is provided with a relay box 106a, which, as shown in FIGURE 19, includes four input connectors C31, C32, C33 and C34. The connectors C31-C34 in the relay box 106a of the rearmost odd-numbered seat unit S1 (FIGURE 8) are connected through input lines L11, L12, L13 and L14 to the connectors C11-C14 of the central control panel 154, respectively.

Each of the relay boxes 106a of the odd-numbered seat units is provided with four output connectors C41, C42, C43 and C44, which are connected to input connectors C31, C32, C33 and C34 of that relay box and also connected through output lines L21, L22, L23 and L24 to the input connectors C31-C34 of the relay box 106a of the preceding, adjacent odd-numbered seat unit S1 (S2).

In FIGURE 8, for the simplification purpose, the four lines L11-L14 and the four lines L21-24 are represented by single lines.

Although FIGURE 19 shows the circuit diagram of the relay box 106a of the rearmost odd-numbered seat unit, the circuit diagram of each of the other relay boxes 106a can result by substituting reference numerals L21, L22, L23 and L24 for the reference numerals L11, L12, L13 and L14, respectively, in FIGURE 19.

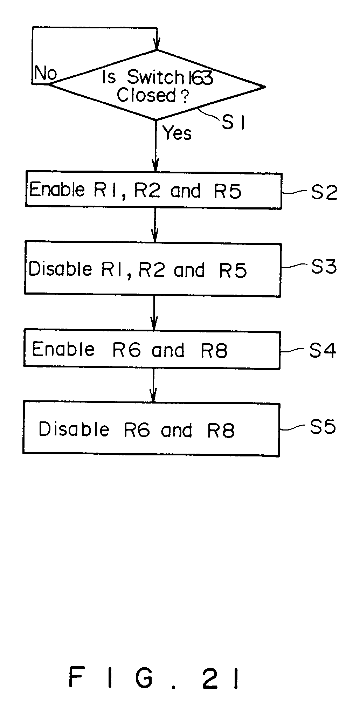

As shown in FIGURE 8, each of the seat rotating systems 106 of the even-numbered seat units S1 and S2 is provided with a relay box 106b. As shown in FIGURE 20, each relay box 106b is provided with seven input connectors C51, C52, C53, C54, C55, C56 and C57. The connectors C51-C57 in the relay box 106b of the rearmost even-numbered seat unit (FIGURE 8) are connected through input lines L31, L32, L33, L34, L35, L36 and L37 to the connectors C21-C27 of the central control panel 154, respectively.

Each of the relay boxes 106b is also provided with seven output connectors C61, C62, C63, C64, C65, C66 and C67 which are connected respectively to the input connectors C51-C57 of that relay box 106b, as shown in FIGURE 20, and also connected through output lines L41, L42, L43, L44, L45, L46 and L47, respectively, to the input connectors C51-C57 of the relay box 106b of the preceding, adjacent even-numbered seat unit S1 (S2).

In FIGURE 8, for the simplification purpose, the seven lines L31-L37 and the seven lines L41-47 are represented by single lines.

Although FIGURE 20 shows the circuit diagram of the relay box 106b of the rearmost even-numbered seat unit, the circuit diagram of each of the other relay boxes 106b can be obtained by substituting reference numerals L41, L42, L43, L44, L45, L46 and L47 for the input lines L31, L32, L33, L34, L35, L36 and L37, respectively, in FIGURE 20.

As shown in FIGURE 19, each of the relay boxes 106a of the odd-numbered seat units is provided with three connectors C71, C72 and C73 for connection to the motor 16a of that seat rotating system 106, and with three connectors C74, C75 and C76 for connection to the limit switch 48 and a reversal switch 168. The connectors C71-C73 are connected to the connectors C31-C33, respectively. Between the connectors C32 and C72 and between the connectors C33 and C73, there are disposed switch contacts Rlla which are closed when no current is flowing through a later-mentioned relay R11 and opened when current is flowing through the relay R11.

The limit switch 48 is connected between the connectors C74 and C75. The reversal switch 168 is connected between the connectors C75 and C76. The reversal switch 168 may be disposed in the limit switch 48, for example. The reversal switch 168 is closed when the limit switch 48 is opened, and is opened when the limit switch 48 is closed.

The connector C74 is connected to the connector C34. It is also connected to the connector C75 through a switch R12a which is closed when no current is flowing through a later-mentioned relay R12 and is opened when current is flowing through the relay R12.

The connector C74 is connected through the switch R12a and the relays R12 and R11 to the connector C76. The junction E between the relays R11 and R12 and the junction F between the connectors C31 and C71 are interconnected.

As shown in FIGURE 20, each relay box 106b includes two connectors C81 and C82 for connection to a limit switch 153 for that relay box 106b, and also three connectors C83, C84 and C85 for connection to the motor 16a of the seat rotating system 106 of that seat unit S1 (S2). The limit switch 153 is attached to the bottom plate 14a of the seat rotating system 106 of each of either the odd-numbered or even-numbered seat units, as indicated by phantom lines in FIGURE 10. In the illustrated embodiment, the limit switch 153 is provided on each of the even-numbered seat units. The limit switch 153 is normally open, and it is closed by a manipulating piece 28b attached to the manipulating member 28 when the manipulating member 28 moves toward the window side of the car. The relay box 106b includes two connectors C86 and C87 for connection to the limit switch 48, too. It should be noted that, difference from the limit switch 48 for the odd-numbered seat units, the limit switches 48 for the even-numbered seat units are closed when the seat units are in the initial position, and otherwise opened.

The connector C51 is connected to the connector C81 through a relay R22. The connectors C52 and C53 are connected to the connectors C84 and C85, respectively, through interrupting means, e.g. contacts R22a, which are closed when no current is flowing through the relay 22 and are opened when current is flowing through the relay R22. The connector C54 is connected to the connector C83. The connectors C55 and C56 are connected to the connectors C84 and C85, respectively, through contacts R21a which are closed when no current is flowing through a later-mentioned relay R21 and opened when current is flowing through the relay R21. The connector C57 is connected to the connector C87 via the relay R21, and the connector C86 is connected to the connector C54.

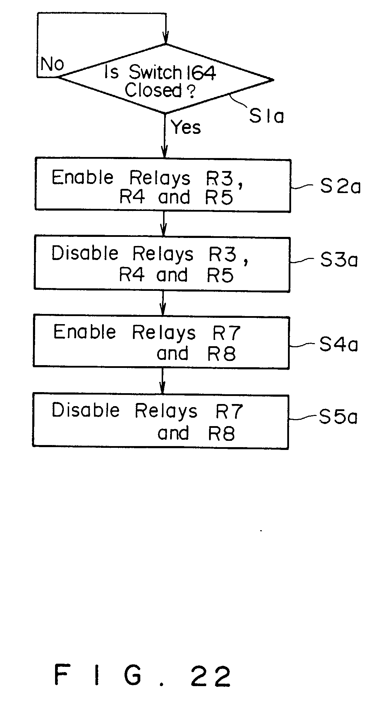

For rotating the seat units S1 and S2 in the clockwise direction, the push-button switch 163 is closed. Then, the PC 155 senses it (Step S1), as shown in the flow chart shown in FIGURE 21. The PC 155 enables the relays R1, R2 and R5, in accordance with the program therein, to close the contacts R1a, R2a and R5a. This causes a seat rotating command to be sent to the relay boxes 106a and 106b (Step S2). The seat rotating command causes the seat units to rotate in the clockwise direction.

This causes current to flow from the AC power supply 156 through the power supply line 160 (FIGURE 18), the switch R00a (FIGURE 18), the connector C11 (FIGURE 18), the connector C31 and C71 (FIGURE 19), the motor 16a (FIGURE 19), the connectors C72 and C32 (FIGURE 19), the connector C12 (FIGURE 18), the power supply line 161 (FIGURE 18), and the switch R01a (FIGURE 18) back to the AC power supply 156, for each of the odd-numbered seat units S1 and S2, so that the motors 16a in the seat rotating systems 106 of the odd-numbered seat units start rotating.

Before the motors 16a start operating, i.e. when the first and second rotary members 25 and 26 are in their initial positions, the limit switch 48 in the seat rotating system 106 of each of the odd-numbered seat units is opened, the reversal switch 168 is closed, the switches Rlla associated with the relay R11 are closed, and the switch R12a associated with the relay R12 is opened, as shown in FIGURE 19. When the first and second rotary members 25 and 26 start rotating with the rotation of the motor 16a, the limit switch 48 is closed, and the reversal switch 168 is opened.

Then, current flows from the AC power supply 156 through the connectors C11 and C31, the junctions F and E, the relay R12, the connector C75, the limit switch 48, the connectors C74, C34 and C14, and the switch R5a back to the AC power supply 156, which results in the enabling of the relay R12. As a result, the switch R12a is closed, which causes current to flow from the junction E through the relay R12, the switch R12a, the connectors C34 and C14, and the switch R5a, so that the switch R12a is kept closed.

As for the even-numbered seat units S1 and S2, in each of the seat rotating systems 106, current flows from the AC power supply 156 through the power supply line 160, the connector C24, the connectors C54 and C83 (FIGURE 20), the motor 16a, the connector C84 (FIGURE 20), the switches R22a (FIGURE 20), the connector C52 (FIGURE 20), the connector C22 (FIGURE 18), the closed switch R2a, the power supply line 161 and the switch ROla, back to the AC power supply 156, which energizes the motor 16a of the seat rotating system 106 of each of the even-numbered seat units S1 and S2.

The motor 16a rotates the first and second rotary members 25 and 26 of each seat rotation system 106 by a given angle, which causes the manipulating member 28 shown in FIGURE 9 to move toward the window side of the car. This, in turn, causes the backrests of the seats to return to the upright position and also causes the locking member 7 to be released. This causes the limit switch 153 to be closed.

Then, current flows from the AC power supply 156 through the switch R00a, the connector C24, the connectors C54 and C82, the limit switch 153, the connector C81, the relay R22, the connector C51, the connector C21, and the power supply line 161 back to the AC power supply 156. Thus, the relay R22 is enabled.

As a result, the switches R22a are opened, and the path from the connector C54 through the motor 16a to the connector C52 is opened, so that the motor 16a stops rotating. Thus, for each of the even-numbered seat units S1 and S2, the motor 16a is deenergized, halting the rotation of the first and second rotary members 25 and 26 when the locking member 7 is released and the backrests of the seats are returned to the upright position.

Alternatively, first timer means may be provided in the PC 155, which is caused to start measuring a time T1 upon the start of operation of the seat rotating systems 106. When the first timer means measures the time period T1, it develops an output to stop the motor 16a. The time T1, thus, is the time required for unlocking the even-numbered seat units and returning the backrests to the upright position. The use of the first timer means may eliminate the use of the limit switch 153 and the relay R22, which can simplify the circuit configuration of the control unit.

Even after the rotation of the first and second rotary members 25 and 26 of the even-numbered seat units S1 and S2 is halted, the motors 16a of the odd-numbered seat units S1 and S2 continue to rotate, so that the pushing roller 41 on each of the rotary members 25 of the odd-numbered seat units rotates clockwise, while pushing the transmission member 146, which, in turn, rotates the seat unit S1 (S2) in the clockwise direction. The first and second rotary members 25 and 26 rotate 360 degrees, so that the limit switch 48 comes into contact with the smaller diameter section 26c of the second rotary member 26 and is opened. This causes the reversal switch 168 to be closed.

Then, current starts flowing from the connector C31 through the junctions F and E, the relay R11, the reversal switch 168, the connector C75, and the switch R12a to the connector C34, so that the relay R11 is energized. This causes the switches R11a to be opened, and the motor 16a stops rotating.

In this way, the clockwise rotation of the odd-numbered seat units S1 and S2 is completed.

The time T2 required for the first and second rotary members 25 and 26 of the seat rotating systems 106 of the odd-numbered seat units to rotate 360 degrees may be, for example, about twenty seconds. The PC 155 measures a time period T3 ( >T2) from the start of the enabling of the relays R1, R2 and R5 performed in Step S2 by means of second timer means provided therein, and disables the relays R1, R2 and R5 when the time period T3 lapses (Step S3). The time T3 may be, for example, about thirty seconds.

After the relays R1, R2 and R5 are disabled, the PC 155 enables the relays R6 and R8, and re-transmits the rotating command to the even-numbered seat units S1 and S2 (Step S4). This causes the contacts R6a and R8a to be closed, so that current starts flowing from the connector C24 through the connectors C54 and C83, the motor 16a, the connector C84, the contact R21a, the connectors C55 and C25, and the contact R6a to the AC power supply 156, to thereby energize, again, the motor 16a of each seat rotating unit of the even-numbered seat units.

Then, the first and second rotary members 25 and 26 of each of the even-numbered seat units S1 and S2 rotate clockwise, and the pushing roller 41 on the first rotary member 25 pushes the transmission member 146 to rotate the even-numbered seat unit S1 (S2) in the clockwise direction.

The first and second rotary members 25 and 26 of the even-numbered seat units S1 and S2 rotate 360 degrees from their initial positions to cause the limit switches 48 to be closed. This causes current to flow, in each of the seat rotation systems 106 of the even-numbered seat units, through the connectors C24, C54, and C86, the limit switch 48, the connector C87, the relay R21, the connectors C57 and C27 and the contact R8a, to enable the relay R21, resulting in the opening of the switches R21a, so that the motor 16a is deenergized. This completes the clockwise rotation of the even-numbered seat units S1 and S2.

Since the unlocking of the even-numbered seat units and the restoration of the upright position of the backrests of the seats took place when the odd-numbered seat units S1 and S2 were rotated, the time T4 from the re-transmission of the seat rotating command to the completion of the clockwise rotation of the even-numbered seat units is shorter than the time T1 required by the odd-numbered seat units to complete their rotation.

A predetermined time T5 (T5>T4) after the relays R6 and R8 are enabled, the PC 155 disables the relays R6 and R8 (Step S5).

The time required for complete rotation of the seat units can be further reduced by re-transmitting the seat rotating command to the even-numbered seat units immediately after the relays R11 in the relay boxes 106a of the odd-numbered seat units are enabled to thereby stop the motors 16a.

For rotating the seat units S1 and S2 in the counterclockwise direction, the push-button switch 164 is closed. Then, in accordance with the process shown in the flow chart in FIGURE 22, the seat units are rotated in a manner similar to the one described above with respect to the clockwise rotation of the seat units.

The control system and method of the present invention have been described with reference to a single-decked car. The present invention is applicable also to a double-decker, for rotating all of the odd-numbered seat units on the first and second decks first and then rotating all of the even-numbered seat units on the first and second decks.

In the above-described second embodiment, the rotation of the even-numbered seat units is halted while the odd-numbered seat units are continuously rotated, but the rotation of the odd-numbered seat units may be interrupted instead, while continuing the rotation of the even-numbered seat units.

Also, if the width of seat units is relatively small, all of the seat units in a car may be simultaneously rotated.

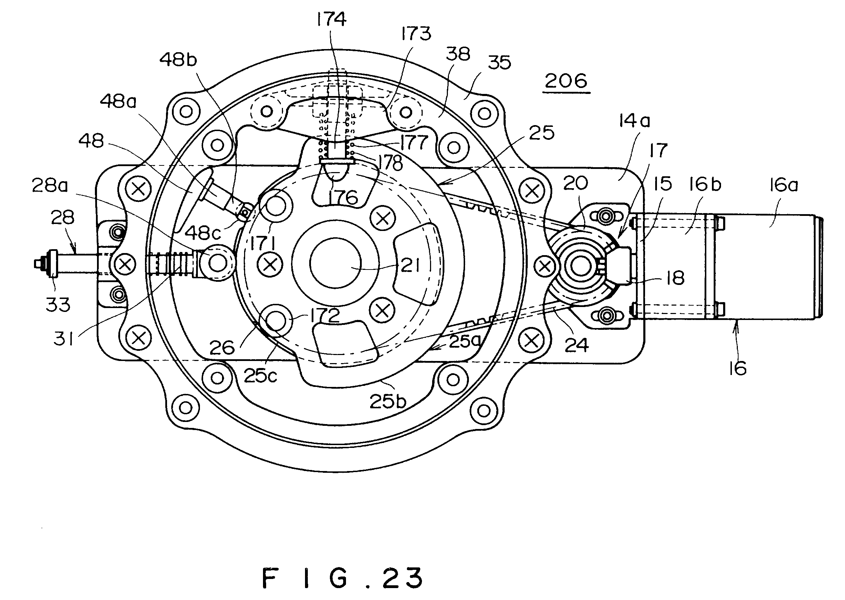

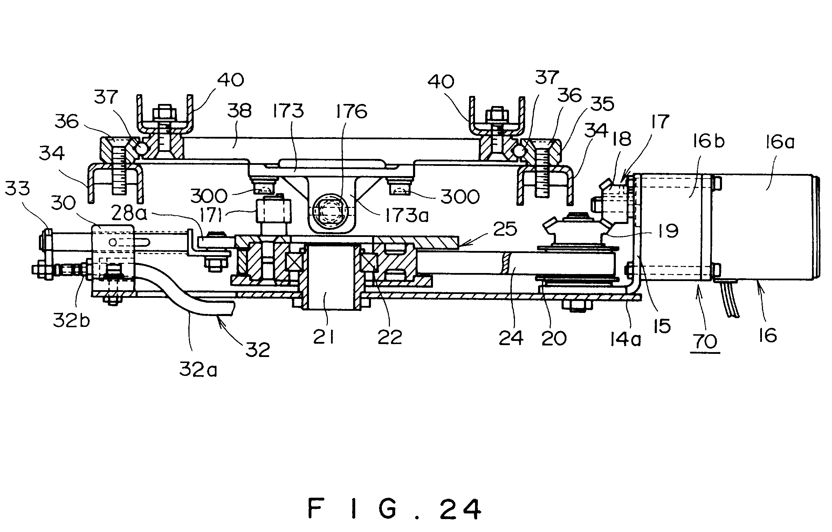

A seat rotating system 206 according to a third embodiment of the invention is now described with reference to FIGURE 23 through FIGURE 27H. As shown in FIGURES 23 and 24, the seat rotating system 206 has substantially the same structure as the seat rotating system 106 of the second embodiment. Therefore, the same reference numerals and symbols are used to denote similar components and functions, and their detailed descriptions are not made.

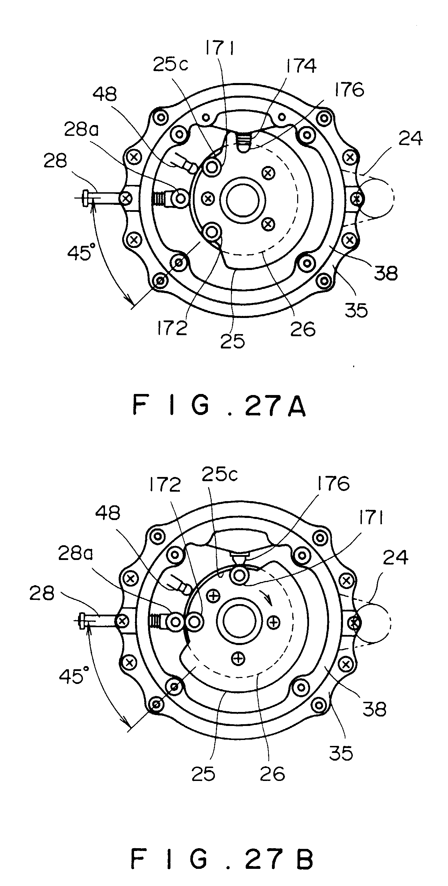

The seat rotating system 206 for each seat unit includes two pushing rollers 171 and 172 which are mounted on the first rotary member 25 at locations line-symmetrical with each other with respect to a line passing through the centers of the first and second rotary members 25 and 26 and the center of the manipulating member 28. As shown in FIGURE 27A, the angle between the manipulating member 28 and each of the rollers 171 and 172 in the initial position is about 45 degrees. The manipulating member 28 in the initial position is facing substantially the center of the cam 25a and is at an angle of about 61 degrees from the opposite ends of the smaller diameter section 25c of the cam 25a.

Also, as shown in FIGURES 23 and 24, a mounting plate 173 is attached, by means of bolts 300, to the inner ring 38 at a location angularly spaced by about 90 degrees from the manipulating member 28. The mounting plate 173 has a downward projecting portion 173a.

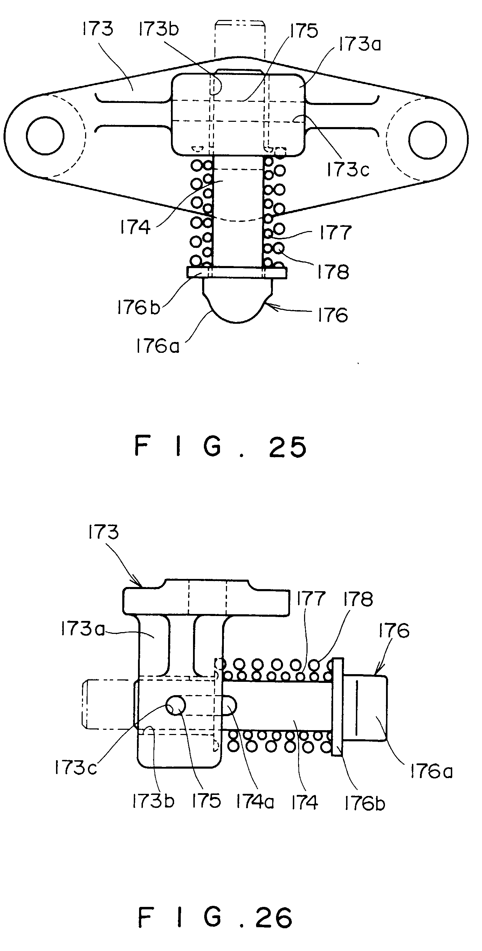

As shown in FIGURES 25 and 26, a through-hole 173b is formed through the downward projecting portion 173a of the mounting plate 173 to extend in the radial direction of the inner ring 38, and a columnar transmission member 174 is inserted into the hole 173b in such a manner that it can move back and forth in the radial direction of the inner ring 38. A hole 174a extends across the transmission member 174. The hole 174a has a given width in the length direction of the transmission member 174. A pin 175 is inserted into the hole 174a to restrict the axial movement of the transmission member 174. The opposed ends of the pin 175 are placed in holes 173c in the downward projecting portion 173a.

A cap member 176 is fitted over the tip end of the transmission member 174. The cap member 176 is provided with tapered surfaces 176a in the portions thereof radially spaced from the axis of the shaft 21 by a distance substantially equal to the distances of the pushing rollers 171 and 172. Coil springs 177 and 178, with the spring 177 located inside the spring 178, are compressed over a portion of the transmission member 174 between an annular flange 176b of the cap member 176 and the downward projecting portion 173a. The combined spring force of the springs 177 and 178 is similar to that of the coil spring 151 of the second embodiment.

When the seat units are in the initial position, the angle between the pushing roller 171 and the cap member 176 is about 29 degrees, and the angle between the pushing roller 172 and the cap member 176 is about 119 degrees.

For rotating the seat units by about 180 degrees in the clockwise direction from the initial position shown in FIGURE 27A, the first and second rotary members 25 and 26 are rotated clockwise by operating the motors 16a. When the first rotary member 25 and the pushing rollers 171 and 172 of each seat unit rotate clockwise by about 29 degrees, the pushing roller 171 comes into contact with the cap member 176 on the transmission member 174. In this position, the manipulating member 28 is still in contact with the smaller diameter section 25c of the first rotary member 25, and, therefore, the seat unit is still locked. Therefore, the pushing roller 171 pushes, against the spring force provided by the coil springs 177 and 178, the cap member 176 and the transmission member 174 toward the retracted position. The rear end portion of the transmission member 174 which is in the retracted position is shown by phantom lines in FIGURE 25.

As shown in FIGURE 27B, when the first rotary member 25 and the pushing rollers 171 and 172 rotate about 45 degrees from the initial positions, the pushing roller 171 reaches the tip (i.e. the foremost end) of the tapered portion of the cap member 176, so that the transmission member 174 is pushed back to the retracted position. As the first rotary member 25 further rotates, the transmission member 174 gradually moves back toward the advanced position by virtue of the spring force provided by the coil springs 177 and 178. When the first rotary member 25 and the pushing rollers 171 and 172 rotate about 61 degrees from their initial positions, the pushing roller 171 leaves the transmission member 174.

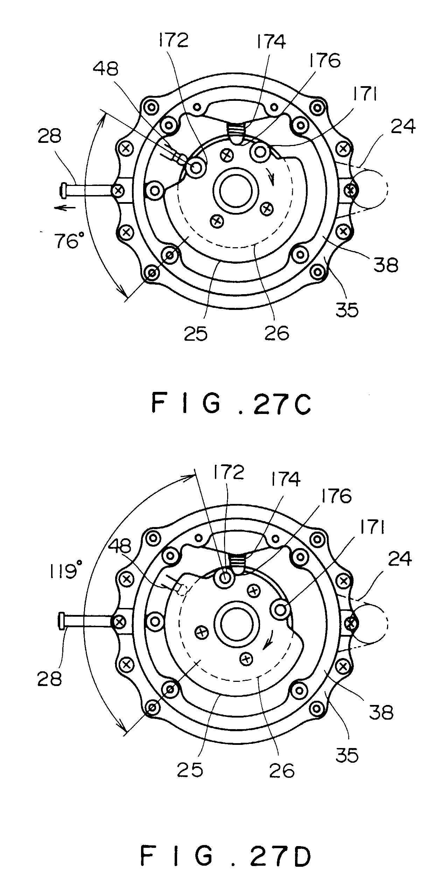

At this time point, the larger diameter section 25b of the cam 25a comes into contact with the manipulating member 28 to push it toward the window side. When the first rotary member 25 and the pushing rollers 171 and 172 rotate about 76 degrees from the initial position, as shown in FIGURE 27C, the manipulating member 28 comes in full contact with the larger diameter section 25b, so that the locking member 7 is released to unlock the seat unit and the backrests of the seats are returned to the upright position.

When the first rotary member 25 and the pushing rollers 171 and 172 further rotate clockwise to positions angularly spaced by about 119 degrees from the respective initial positions shown in FIGURE 27D, the pushing roller 172 contacts the cap member 176 of the transmission member 174. At this time point, the seat carriages 40 have been already unlocked. Accordingly, the clockwise rotation of the pushing roller 172 is transmitted through the cap member 176 and the transmission member 174 to the inner ring 38 and the seat carriages 40, which causes the seat unit to rotate in the clockwise direction with the rotation of the pushing roller 172.

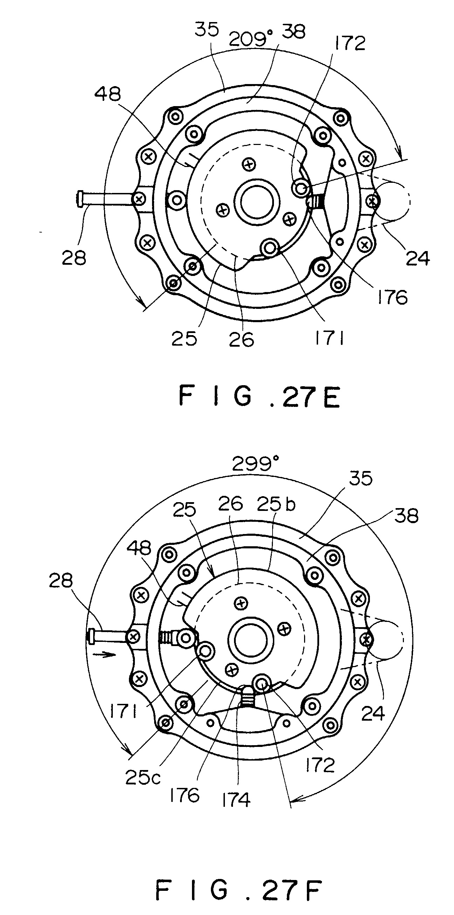

When the first rotary member 25 and the pushing rollers 171 and 172 rotate about 209 degrees from their initial positions as shown in FIGURE 27E, the transmission member 174 and the seat unit rotate about 90 degrees in the clockwise direction. After that, when the first rotary member 25 and the pushing rollers 171 and 172 rotate to the respective positions about 284 degrees in the clockwise direction from the initial positions, the smaller diameter section 25c of the cam 25a comes into contact with the manipulating member 28, and the manipulating member 28 moves toward the aisle side of the car by virtue of the spring force provided by the coil spring 31. The first rotary member 25 and the pushing rollers 171 and 172 further rotate to positions spaced about 299 degrees clockwise from their initial positions, which results in the clockwise rotation of the seat unit of about 180 degrees as shown in FIGURE 27F. Then, one of the stops 12 on the bottom plate 10 of the seat unit contacts the contact member 13, and the seat unit is locked by the locking member 7.

After that, the first rotary member 25 and the pushing rollers 171 and 172 rotate further clockwise, so that the pushing roller 172 pushes the tapered surface 176a of the cap member 176. This causes the transmission member 174 to be moved toward the retracted position against the spring force provided by the coil springs 177 and 178. Then, as shown in FIGURE 27G, the pushing roller 172 moves beyond the tip end of the cap member 176, so that the transmission member 174 returns to the advanced position by virtue of the spring force of the coil springs 177 and 178.

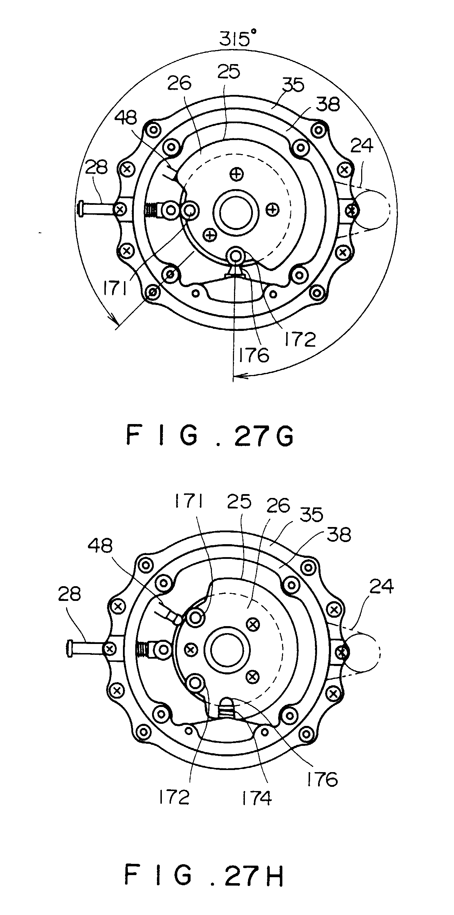

When the first rotary member 25 and the pushing rollers 171 and 172 further rotate to positions 360 degrees away from their initial positions, as shown in FIGURE 27H, the roller 48c of the limit switch 48 contacts with the smaller diameter section 26c of the second rotary member 26, so that the motor 16a is deenergized and stops. Thus, the rotation of the seat unit is completed.

For rotating the seat units in the counterclockwise direction, the motors 16a are rotated in the reverse direction when the seat units are in the position shown in FIGURE 27H, so that the system operates in the opposite direction to the above-stated, in which the pushing roller 172 in each system 206 moves beyond the tip end of the cap member 176 of the transmission member 174, and, then, the pushing roller 171 comes into contact with and pushes the cap member 176 in the counterclockwise direction, so that the seat unit carriages 40 are rotated in the counterclockwise direction.

According to the third embodiment, when the pushing roller 171 or 172 rotates the seat unit 180 degrees, the transmission member 174 linearly moves toward the retracted position, and, then, the transmission member 174 is disengaged from the pushing roller 171 or 172. On the other hand, according to the second embodiment, it is necessary for the transmission member 146 to move to the retracted position B, then move back and return to the retracted position B, again, in order for the transmission member 146 to be disengaged from the pushing roller 41. For that, the angular range of the larger diameter section 25b is so selected that the manipulating member 28 comes into contact with the smaller diameter section 25c to thereby cause the seat unit to be locked when the transmission member 146 rotates about its own axis as shown in FIGURE 16G. On the other hand, according to the third embodiment, the angular range of the larger diameter section 25b is so selected that the manipulating member 28 comes into contact with the smaller diameter section 25c to thereby cause the seat unit to be locked when the transmission member 174 moves to the retracted position as shown in FIGURE 27F. Accordingly, the angular range or the length of the larger diameter section 25b along the periphery of the first rotary member 25 should be smaller in the third embodiment than in the second embodiment. With this arrangement, the rotation of the seat unit can be stopped without fail even when the stop 12 could not operate properly to stop the movement of the seat unit for any reason.

The seat rotating system according to the third embodiment is so arranged that the seat unit is rotated by the pushing roller via the transmission member after the manipulating member 28 releases the locking member 7 to thereby unlock the seat unit. Accordingly, each of the pushing rollers and the transmission member must be so spaced from each other along the periphery of the first rotary member 25 that each of the pushing rollers does not contact the transmission member before the roller 28a of the manipulating member 28 comes into contact with the larger diameter section 25b. However, as described above, the angular range along the periphery of the first rotary member 25 occupied by the larger diameter section 25b is small, and, therefore, the unlocking of the seat unit by the manipulating member 28 would be delayed. Then, it is necessary to provide a large peripheral spacing between each of the pushing rollers and the transmission member.

If only one pushing roller were provided on the rotary member 25, it would be difficult to provide a spacing along the periphery of the rotary member 25 between the pushing roller and the transmission member sufficient for both the clockwise and counterclockwise rotations of the seat unit. This is the reason for the use of the two pushing rollers 171 and 172 disposed at locations symmetrical with each other with the line connecting the manipulating member 28 and the center of the rotary member 25 being the line of symmetry, in which the pushing roller 172 is used for rotating the seat unit clockwise, whereas the pushing roller 171 is used for rotating the seat unit in the counterclockwise direction.

In the second and third embodiments, the transmission member 146 or 174 are retracted from the path of the pushing roller 141 or the pushing rollers 171 and 172. Alternatively, the transmission member 146 or 174 may be fixed to the inner ring 38, while the pushing roller 141 or the pushing rollers 171 and 172 are made movable in the radial direction of the seat carriages 40 to the retracted position.

## Claims

1. A seat reversing system comprising:
a seat carriage mounted on a fixed support in such a manner as to be rotatable selectively in the clockwise and counterclockwise directions about a first rotation center;
an engagement member secured to said fixed support for restricting the rotation of said seat carriage to an angular range which extends over about 180 degrees;
a transmission member mounted on said seat carriage;
a pushing member rotatable about said first rotation center, said pushing member being disposed at a location on a circle along which said transmission member moves with the rotation of said seat carriage, said location being outside the angular range of 180 degrees over which said transmission member moves; and
a motor for rotating said pushing member about said first rotation center so that said pushing member can come into contact with and pushes said transmission member for rotating said transmission member about said first rotation center;
wherein one of said pushing member and transmission member is rotatable about a second rotation center so that the contact between said pushing member and said transmission member can be removed; and
the contact between said pushing member and said transmission member is maintained by means of biasing means until said engagement member stops the rotation of said seat carriage.

2. The seat reversing system according to Claim 1 wherein said pushing member is disposed on a rotary member with a cam formed on an outer periphery thereof; a locking member for locking said seat carriage at opposed ends of said angular range of 180 degrees is further provided; and a manipulating member for releasing said locking member is actuated by said cam.

3. The seat reversing system according to Claim 2 wherein said motor is disposed beside said rotary member, and said system further comprises a transmission arrangement for transmitting driving force provided by said motor to said rotary member.

4. A seat reversing system comprising:
a seat carriage mounted on a fixed support in such a manner as to be rotatable between first and second positions angularly spaced about 180 degrees from each other alternately in the clockwise and counterclockwise directions about a first rotation center;
a locking member for locking said seat carriage at said first and second positions;
a transmission member mounted on said seat carriage and rotatable with said seat carriage; and
a pushing member rotatable about said first rotation center in the clockwise and counterclockwise directions from a location on a circle along which said transmission member moves with the rotation of said seat carriage, said location being outside a range defined by locations corresponding to said respective first and second positions of said seat carriage, said pushing member rotating to come into contact with said transmission member;
wherein one of said transmission member and pushing member is disposed on said circle in such a manner that said one of said members, while being in contact with the other, can move from an advanced position to a retraced position along a line extending from said first rotation center, said one member in said retraced position being rotatable about a second rotation center to a turnout position where the contact between said transmission member and said pushing member is removed; and
said system further comprises first biasing means for biasing said one member toward said advanced position, engaging means formed on said one member for preventing said one member in said advanced position from rotating about said second rotation center and allowing said one member in said retracted position to rotate about said second rotation center, and second biasing means for biasing said one member toward said retracted position.

5. The seat reversing system according to Claim 4 wherein said system further comprises a rotary member rotatable about said first rotation center, and a manipulating member for releasing said locking member; said pushing member being mounted on said rotary member; said rotary member being formed with a cam which drives said manipulating member for releasing said locking member.

6. A seat reversing system comprising:
a seat carriage mounted on a fixed support in such a manner as to be rotatable between first and second positions angularly spaced about 180 degrees from each other alternately in the clockwise and counterclockwise directions about a first rotation center;
a locking member for locking said seat carriage at said first and second positions;
a transmission member mounted on said seat carriage and rotatable with said seat carriage; and
a pushing member rotatable about said first rotation center in the clockwise and counterclockwise directions from a location on a circle along which said transmission member moves with the rotation of said seat carriage, said location being outside a range defined by locations corresponding to said respective first and second positions of said seat carriage, said pushing member rotating to come into contact with said transmission member;
wherein one of said transmission member and pushing member is disposed on said circle in such a manner that said one of said members, while being in contact with the other, can move from an advanced position to a retraced position along a line extending from said first rotation center; and said system further comprises biasing means for biasing said one member so that the contact between said transmission member and said pushing member can be maintained.

7. The seat reversing system according to Claim 6 wherein said system further comprises a rotary member rotatable about said first rotation center, and a manipulating member for releasing said locking member; said pushing member being mounted on said rotary member; said rotary member being formed with a cam which drives said manipulating member for releasing said locking member.

8. The seat reversing system according to Claim 7 wherein two such pushing members are disposed on said circle at locations line symmetrical with each other with the line of symmetry connecting said manipulating member and said first rotation center.

9. The seat reversing system according to one of Claims 4 and 6 wherein one of said transmission member and said pushing member has a tapered surface for receiving a component of force along a line extending from said first rotation center from the other of said transmission member and said pushing member so that said one member can move from said advanced position when said pushing member rotates about said first rotation center.

10. The seat reversing system according to one of Claims 1, 4 and 6 wherein there is further provided a member for detecting the position where said pushing member starts rotating about said first rotation center.

11. A seat reversing system comprising:
at least two seats consisting of odd-numbered and even-numbered ones arranged in a row, each comprising a seat carriage mounted on a fixed support in such a manner as to be rotatable between first and second positions angularly spaced about 180 degrees from each other alternately in the clockwise and counterclockwise directions about a first rotation center, a locking member for locking said seat carriage at said first and second positions, a manipulating member for releasing said locking member and returning a backrest of said seat to an upright position, and a driving unit receptive of a seat reversing command for actuating said manipulating member and reversing said seat carriage;
a detecting member mounted on the seat carriage of one of said odd-numbered and even-numbered seats, for providing a detection signal when detecting the operation of said manipulating member of that seat; and
a control unit for providing said seat reversing command to said driving units;
wherein said control unit comprises:
means for supplying said seat reversing command to all of said driving units simultaneously;
means for receiving a detection signal from said detecting member for halting the supply of said seat reversing command to one of said odd-numbered and even-numbered seats; and
means for re-transmitting said seat reversing command to said one of said odd-numbered and even-numbered seats upon completion of the rotation of said seat carriage of the other of said odd-numbered and even-numbered seats.

12. A seat reversing system comprising:
at least two seats consisting of odd-numbered and even-numbered ones arranged in a row, each comprising a seat carriage mounted on a fixed support in such a manner as to be rotatable between first and second positions angularly spaced about 180 degrees from each other alternately in the clockwise and counterclockwise directions about a first rotation center, a locking member for locking said seat carriage at said first and second positions, a manipulating member for releasing said locking member and returning a backrest of said seat to an upright position, and a driving unit receptive of a seat reversing command for actuating said manipulating member and reversing said seat carriage;
a detecting member mounted on the seat carriage of one of said even-numbered and odd-numbered seats, for providing a detection signal when detecting the operation of said manipulating member of that seat; and
a control unit for providing said seat reversing command to said driving units;
wherein said control unit comprises:
means for supplying said seat reversing command to all of said driving units simultaneously;
first timer means for counting a first time period corresponding to a time period from the start of the seat rotating operation to the end of the operation of said manipulating member and developing a signal when said first time period has been counted;
means for receiving said signal developed by said first timer means for halting the supply of said seat reversing command to one of said odd-numbered and even-numbered seats; and
means for re-transmitting said seat reversing command to said one of said odd-numbered and even-numbered seats upon completion of the rotation of said seat carriage of the other of said odd-numbered and even-numbered seats.

13. The seat reversing system according to Claim 11 or 12 wherein said control unit includes second timer means for counting a second time period corresponding to a time period required for said seat carriage of said other of said odd-numbered and even-numbered seats to complete the rotation and developing a signal upon completion of the rotation of said seat carriage; and said re-transmitting means re-transmits said seat reversing command in response to said signal from said second timer means.

14. A method for controlling the reversing of at least two seats consisting of odd-numbered and even numbered ones arranged in a row:
each of said seats comprising a seat carriage mounted on a fixed support in such a manner as to be rotatable between first and second positions angularly spaced about 180 degrees from each other alternately in the clockwise and counterclockwise directions about a first rotation center, a locking member for locking said seat carriage at said first and second positions, a manipulating member for releasing said locking member and returning a backrest of said seat to an upright position, and a driving unit receptive of a seat reversing command for actuating said manipulating member and reversing said seat carriage;
said method comprising the steps of:
supplying said seat reversing command to said driving units of all of said seats simultaneously;
halting the supplying of said seat reversing command to the driving unit of one of said odd-numbered and even-numbered seats when said manipulating member of said one of said odd-numbered and even-numbered seats is actuated; and
re-transmitting said seat reversing command to the driving unit of said one of said odd-numbered and even-numbered seats upon completion of the rotation of the other of said odd-numbered and even-numbered seats.

15. A method for controlling the reversing of at least two seats consisting of odd-numbered and even numbered ones arranged in a row:
each of said seats comprising a seat carriage mounted on a fixed support in such a manner as to be rotatable between first and second positions angularly spaced about 180 degrees from each other alternately in the clockwise and counterclockwise directions about a first rotation center, a locking member for locking said seat carriage at said first and second positions, a manipulating member for releasing said locking member and returning a backrest of said seat to an upright position, and a driving unit receptive of a seat reversing command for actuating said manipulating member and reversing said seat carriage;
said method comprising the steps of:
supplying said seat reversing command to said driving units of all of said seats simultaneously;
halting the supplying of said seat reversing command to the driving unit of one of said odd-numbered and even-numbered seats a predetermined time after the supplying of said seat reversing command at which said manipulating members of said seats are actuated; and
re-transmitting said seat reversing command to the driving unit of said one of said odd-numbered and even-numbered seats upon completion of the rotation of the other of said odd-numbered and even-numbered seats.
